# EUROPÄISCHE PATENTANMELDUNG

(11) **EP 4 647 550 A1**
(43) Veröffentlichungstag der Anmeldung: **12.11.2025**
(21) Anmeldenummer: 25172772.3
(22) Anmeldetag: 27.04.2025
(51) Int. Cl.: E01C 21/00, E01C 23/088, B60K 35/22, B60K 35/28

(54) **SELBSTFAHRENDE STRASSENBAUMASCHINE**

(30) Priorität: 09.05.2024 DE 102024113082
(71) Anmelder: Wirtgen GmbH, 53578 Windhagen (DE)
(72) Erfinder: Menzenbach, Christoph, 53577 Neustadt (DE)
(74) Vertreter: Oppermann, Frank

(57) **Zusammenfassung**

Die erfindungsgemäße Straßenbaumaschine verfügt über eine Steuereinrichtung 27, die derart konfiguriert ist, dass Steuerbefehlssignale für den Rädern 4, 5, 6, 7 und/oder der Fräs-/Mischwalze 18 zugeordneten Antrieben und Aktoren 8, 9, 16, 20A, 20B erzeugt werden. Darüber hinaus ist eine mit der Steuereinrichtung 27 zusammenwirkende Mensch-Maschinen-Schnittstelle 26 und eine mit der Steuereinrichtung zusammenwirkende Speichereinrichtung 30 sowie eine mit der Steuereinrichtung zusammenwirkende Zustandsüberwachungseinrichtung 32 vorgesehen, welche einen Betriebszustand oder Betriebsmodus der Antriebe und Aktoren erfasst. Die Straßenbaumaschine zeichnet sich dadurch aus, dass in der Speichereinrichtung eine Mehrzahl von Handlungsanweisungs-Datensätzen gespeichert sind, welche jeweils Daten für eine mit der Mensch-Maschinen-Schnittstelle zu visualisierende Handlungsanweisung beinhalten. Die Steuereinrichtung sieht einen Lernmodus mit einer Mehrzahl von Lektionen für die Einstellung der Stellung der Räder und/oder der Höhe der Fräs-/Mischwalze vor und ist derart konfiguriert, dass in Abhängigkeit von einem von der Zustandsüberwachungseinrichtung erfassten Betriebszustand oder Betriebsmodus der Antriebe und Aktoren eine Auswahl eines bestimmten Datensatzes aus den in der Speichereinrichtung gespeicherten Handlungsanweisungs-Datensätzen getroffen wird, und die dem ausgewählten Handlungsanweisungs-Datensatz entsprechende Handlungsanweisung mit der Mensch-Maschinen-Schnittstelle visualisiert wird. Darüber hinaus erzeugt die Steuereinrichtung in Abhängigkeit von der mit der Mensch-Maschinen-Schnittstelle nach der Visualisierung der Handlungsanweisung vorgenommenen Befehlseingabe die der Befehlseingabe entsprechenden Steuerbefehlssignale für die Antriebe und Aktoren, so dass sich die Räder und/oder Fräs-/Mischwalze bewegen.

## Beschreibung

Die Erfindung betrifft eine selbstfahrende Straßenbaumaschine mit einem von antreibbaren, lenkbaren Rädern oder Kettenlaufwerken getragenen Maschinenrahmen und einer an dem Maschinenrahmen angeordneten und in Bezug auf die Oberfläche des zu bearbeitenden Bodens in der Höhe verstellbaren Fräs-/Mischwalze zur Bearbeitung des Bodens und einer Mehrzahl von den Rädern oder Kettenlaufwerken und der Fräs-/Mischwalze zugeordneten Antrieben und/oder Aktoren zum Antreiben und Lenken der Räder oder Kettenlaufwerke und Einstellen der Höhe der Fräs-/Mischwalze in Bezug auf die Oberfläche des zu bearbeitenden Bodens.

Zu den bekannten selbstfahrenden Straßenbaumaschinen zählen die Straßenfräsmaschinen, mit denen ein Straßenbelag abgefräst werden kann. Von den Straßenfräsmaschinen sind die Stabilisierer oder Recycler zu unterscheiden, die durch Zugabe von Bindemitteln aus einem nicht tragfähigen Untergrund, beispielsweise einem losen Boden (Stabilisierer) oder einer schadhaften Fahrbahn (Recycler), beispielsweise einen tragfähigen Unterbau herstellen, der für die spätere Überbauung mit einer Fahrbahn geeignet ist. Straßenfräsmaschinen und Stabilisierer oder Recycler verfügen über eine in Bezug auf den zu bearbeitenden Boden in der Höhe verstellbare Fräs- /Mischwalze zum Auffräsen und Durchmischen des Untergrunds, ggf. mit zusätzlich eingegebenem Bindemittel, wobei die Fräs-/Mischwalze an einem Maschinenrahmen angeordnet ist, der von Rädern oder Kettenlaufwerken getragen wird. Zum Antrieb und zum Lenken der Räder oder Kettenlaufwerke sowie zur Höheneinstellung der Fräs-/Mischwalze sind Antriebe und/oder Aktoren vorgesehen. Darüber hinaus verfügen die bekannten Straßenbaumaschinen über eine Steuereinrichtung, um die Antriebe und/oder Aktoren ansteuern zu können.

Die Höheneinstellung der Fräs-/Mischwalze gegenüber der Oberfläche des Bodens kann dadurch erfolgen, dass die Fräs-/Mischwalze gegenüber dem Maschinenrahmen in der Höhe verstellt wird. Wenn die Straßenbaumaschine über Hubeinrichtungen verfügt, von denen der Maschinenrahmen getragen wird, kann die Höheneinstellung der Fräs-/Mischwalze auch durch Anheben und Absenken des Maschinenrahmens erfolgen. Die Hubeinrichtungen erlauben auch die Einstellung der Neigung des Maschinenrahmens gegenüber der Bodenoberfläche.

Die Antriebe und Aktoren der bekannten Straßenbaumaschinen sind im Allgemeinen hydraulische Antriebe und Aktoren. Zur Versorgung der Hydraulikantriebe und -aktoren mit Hydraulikflüssigkeit sind Hydraulikpumpen vorgesehen, die von einem Verbrennungsmotor angetrieben werden. Alternativ können elektrische Antriebe vorgesehen sein, bei denen die Energie beispielsweise durch eine Batterie oder einen von einem Verbrennungsmotor angetriebenen Generator bereitgestellt werden kann.

Darüber hinaus verfügen die bekannten Straßenbaumaschinen über eine Mensch-Maschinen-Schnittstelle, über die das Bedienpersonal mit der Baumaschine in Kontakt treten und kommunizieren kann. Die Interaktion mit der Maschine kann über unterschiedliche Bedienelemente und Anzeigeeinheiten erfolgen.

An die Bedienung von Straßenbaumaschinen werden immer höhere Anforderungen gestellt. Von dem Bedienpersonal wird verlangt, die Stellung der Räder oder Kettenlaufwerke exakt einzustellen, so dass sich die Straßenbaumaschine entlang einer vorgegebenen Linie bewegt, und die Höhe des Maschinenrahmen gegenüber der Bodenoberfläche exakt einzustellen und den Maschinenrahmen gegenüber der Bodenoberfläche exakt auszurichten. Dabei muss das Bedienpersonal auch die Höhe der Fräs-/Mischwalze gegenüber der Bodenoberfläche exakt einstellen können, um die gewünschte Frästiefe zu erzielen.

Der vorliegenden Erfindung liegt die Aufgabe zugrunde, eine selbstfahrende Straßenbaumaschine bereitzustellen, welche dem Bedienpersonal die Möglichkeit gibt, sich mit der Baumaschine schnell vertraut zu machen.

Die Lösung dieser Aufgabe erfolgt erfindungsgemäß mit den Merkmalen des Patentanspruchs 1. Die abhängigen Ansprüche betreffen bevorzugte Ausführungsformen der Erfindung.

Die nachfolgend beschriebenen Ausführungsformen der Erfindung können eines oder mehrere der nachfolgend genannten Merkmale oder Merkmalskombinationen umfassen. Ein mit einem unbestimmten Artikel bezeichnetes Merkmal kann auch mehrfach vorhanden sein, wenn der unbestimmte Artikel nicht mit einem ausdrücklichen Hinweis auf eine nur einmalige Verwendung zu verstehen ist. Eine Bezeichnung von Merkmalen mit einem Zahlwort, beispielsweise "erstes und zweites", schließt nicht aus, dass über die durch das Zahlwort angegebene Anzahl hinaus diese Merkmale noch weitere Male vorhanden sein können. Bei der Beschreibung sämtlicher Ausführungsformen ist der Ausdruck "kann" auch als "vorzugsweise" oder "zweckmäßigerweise" zu verstehen.

Die erfindungsgemäße Straßenbaumaschine verfügt über eine Steuereinrichtung, die derart konfiguriert ist, dass Steuerbefehlssignale für die den Rädern oder Kettenlaufwerken und/oder der Fräs-/Mischwalze zugeordneten Antrieben und/oder Aktoren erzeugt werden, um die Räder oder Kettenlaufwerke anzutreiben und zu lenken und die Höhe der Fräs-/Mischwalze gegenüber dem zu bearbeitenden Boden einzustellen.

Darüber hinaus verfügt die erfindungsgemäße Straßenbaumaschine über eine mit der Steuereinrichtung zusammenwirkende Mensch-Maschinen-Schnittstelle und eine mit der Steuereinrichtung zusammenwirkende Speichereinrichtung. Die Straßenbaumaschine verfügt weiterhin über eine mit der Steuereinrichtung zusammenwirkende Zustandsüberwachungseinrichtung, die derart konfiguriert ist, dass ein Betriebszustand und/oder ein Betriebsmodus der Antriebe und/oder Aktoren erfasst wird. In diesem Kontext wird unter einem Betriebszustand der momentane Zustand eines Antriebs oder Aktors verstanden, in dem sich der Antrieb oder Aktor befindet, beispielsweise ob der Antrieb oder Aktor aktiviert oder deaktiviert ist oder mit welcher Geschwindigkeit sich einzelne Teile des Antriebs oder Aktors bewegen oder welche Stellung einzelne Teile des Antriebs oder Aktors einnehmen. Insofern ist der Betriebszustand der Antriebe oder Aktoren mit einer bestimmten Maschinenfunktion, beispielsweise der Einstellung der Höhe der Fräs-/Mischwalze gegenüber der Bodenoberfläche verknüpft. Folglich kann durch Überwachung des Betriebszustands eines Aktors für die Höheneinstellung die Höhe der Fräs-/Mischwalze erfasst werden. Wenn die Antriebe oder Aktoren unterschiedliche Betriebsmodi ermöglichen sollen, kann die Zustandsüberwachungseinrichtung auch diese Betriebsmodi erfassen, beispielsweise unterschiedliche Lenkmodi, die von der Steuereinrichtung für die Lenkung der Räder oder Kettenlaufwerke vorgesehen sein können. Die Speichereinrichtung kann einen zentralen Speicher, der Bestandteil einer zentralen Steuereinrichtung ist, oder mehrere Speicher umfassen, die jeweils Bestandteil einzelner Steuereinheiten sind.

Die erfindungsgemäße Straßenbaumaschine zeichnet sich dadurch aus, dass in der Speichereinrichtung eine Mehrzahl von Handlungsanweisungs-Datensätzen gespeichert sind, welche jeweils Daten für eine mit der Mensch-Maschinen-Schnittstelle zu visualisierende Handlungsanweisung beinhalten. Die Datensätze können in die Speichereinrichtung eingelesen werden. In diesem Kontext wird unter einer Handlungsanweisung eine Aufforderung an das Bedienpersonal verstanden, eine bestimmte Handlung auszuführen, die in der Vornahme der Eingabe eines Befehls liegt, um die Stellung der Räder oder Kettenlaufwerke und/oder die Höhe der Fräs-/Mischwalze in Bezug auf die Oberfläche des zu bearbeitenden Bodens mittels der Mensch-Maschinen-Schnittstelle einzustellen. Die Handlungsanweisungs-Datensätze beinhalten die Daten, mit denen die Handlungsanweisungen mittels der Mensch-Maschinen-Schnittstelle visualisiert werden können.

Die Mensch-Maschinen-Schnittstelle kann zur Visualisierung der Handlungsanweisungs-Datensätze beispielsweise über ein Display verfügen, auf dem die Visualisierung der Datensätze mit grafischen Darstellungen, insbesondere Piktogrammen oder Animationen, erfolgen kann. Die Daten der Handlungsanweisungs-Datensätze beinhalten dann die zur Darstellung einer Grafik auf dem Display erforderlichen Daten, beispielsweise Bilddaten, um eine Grafik auf dem Display wiedergeben zu können, welche das Bedienpersonal zur Vornahme einer Befehlseingabe auffordert. Die Bilddaten können Daten in den bekannten Formaten sein, beispielsweise das PNG-Format und JPEG-Format, aber auch TIFF, GIF etc. Alternativ oder zusätzlich können zur Visualisierung der Handlungsanweisung die zu betätigenden Bedienelemente, beispielsweise durch eine hervorgehobene Beleuchtung, insbesondere ein Blinken der Bedienelementbeleuchtung gegenüber den anderen Bedienelementen der Baumaschine kenntlich gemacht werden.

Die Steuereinrichtung der Straßenbaumaschine sieht neben einem eigentlichen Betriebsmodus einen Lernmodus mit einer Mehrzahl von Lektionen für die Einstellung der Stellung der Räder oder Kettenlaufwerke und/oder der Höhe der Fräs-/Mischwalze vor. In diesem Kontext wird unter einem Lernmodus ein von dem eigentlichen Betrieb der Baumaschine, welcher ein bestimmtes Arbeitsergebnis zum Ziel hat, losgelöster Modus verstanden, welcher dem Bedienpersonal das Erlernen bestimmter Funktion der Maschine erlauben soll. Der Lernmodus umfasst eine Mehrzahl von Lektionen, wobei jede Lektion ein bestimmtes Lernziel haben kann, beispielsweise die Höheneinststellung der Fräs-/Mischwalze oder Einstellung des Lenkwinkels der Räder oder Kettenlaufwerke.

Die Steuereinrichtung ist für zumindest eine Lektion des Lernmodus derart konfiguriert, dass in Abhängigkeit von einem von der Zustandsüberwachungseinrichtung erfassten Betriebszustand und/oder Betriebsmodus der Antriebe und/oder Aktoren eine Auswahl eines bestimmten Datensatzes aus den in der Speichereinrichtung gespeicherten Handlungsanweisungs-Datensätzen getroffen wird, und die dem ausgewählten Handlungsanweisungs-Datensatz entsprechende Handlungsanweisung mit der Mensch-Maschinen-Schnittstelle visualisiert wird. Folglich wird das Bedienpersonal in Abhängigkeit von einem Betriebszustand bzw. Betriebsmodus eines Antriebs oder Aktors zu einer bestimmten Befehlseingabe zur Steuerung der Maschine aufgefordert, um sich mit einer bestimmten Maschinenfunktion vertraut machen zu können, welche von der Maschine selbst vorgegeben wird.

Die Steuereinrichtung ist weiterhin derart konfiguriert, dass in Abhängigkeit von der mit der Mensch-Maschinen-Schnittstelle nach der Visualisierung der Handlungsanweisung von einem Menschen vorgenommenen Befehlseingabe die der Befehlseingabe entsprechenden Steuerbefehlssignale für die Antriebe und/oder Aktoren zum Antreiben und Lenken der Räder oder Kettenlaufwerke und/oder Einstellen der Höhe der Fräs-/Mischwalze erzeugt werden, so dass nach der Befehlseingabe die Stellung der Räder oder Kettenlaufwerke und/oder die Höhe der Fräs-/Mischwalze tatsächlich verändert wird. Dies unterscheidet den Lernmodus von einer reinen Simulation. Die Straßenbaumaschine ermöglicht dem Bedienpersonal, die entsprechende Reaktion der Baumaschine auf die Befehlseingabe auch zu erfahren, so dass sich das Bedienpersonal mit einer von der Maschine in Abhängigkeit von dem jeweiligen Betriebszustand- bzw. Betriebsmodus vorgegebenen Maschinenfunktion vertraut machen kann. Dies ist für den Lernerfolg entscheidend.

Eine Ausführungsform der erfindungsgemäßen Straßenbaumaschine sieht vor, dass eine Lektion des Lernmodus die Einstellung der Höhe der Fräs-/Mischwalze in Bezug auf die Oberfläche des zu bearbeitenden Bodens ist. Für diese Funktion des Lernmodus ist die Steuereinrichtung derart konfiguriert ist, dass, wenn die von der Zustandsüberwachungseinrichtung erfasste Höhe der Fräs-/Mischwalze in Bezug auf die Bodenoberfläche kleiner als ein vorgegebener Grenzwert für die Höhe ist, von den in der Speichereinrichtung gespeicherten Handlungsanweisungs-Datensätzen ein Handlungsanweisungs-Datensatz ausgewählt und mit der Mensch-Maschinen-Schnittstelle die dem ausgewählten Handlungsanweisungs-Datensatz entsprechende Handlungsanweisung visualisiert wird, welche einen Menschen zur Vornahme einer Befehlseingabe zum Anheben der Fräswalze auffordert, so dass zumindest ein der Fräs-/Mischwalze zugeordneter Aktor derart betätigt wird, dass die Fräs-/Mischwalze angehoben wird. Dadurch wird sichergestellt, dass sich das Bedienpersonal mit der Höheneinstellung der Fräs-/Mischwalze unter realistischen Bedingungen vertraut machen kann, ohne dass sich das Bedienpersonal über die momentane Stellung der Fräs-/Mischwalze Gedanken machen müsste. Das Bedienpersonal kann die Höheneinstellung daher üben, ohne dass die Gefahr besteht, dass die Fräs-/Mischwalze schon bei dem ersten Versuch unbeabsichtigt in den Boden eindringen könnte.

Die Steuereinrichtung ist weiterhin derart konfiguriert, dass, wenn die von der Zustandsüberwachungseinrichtung erfasste Höhe der Fräs-/Mischwalze in Bezug auf die Bodenoberfläche größer als ein vorgegebener Grenzwert für die Höhe ist, aus den Handlungsanweisungs-Datensätzen ein Handlungsanweisungs-Datensatz ausgewählt und mit der Mensch-Maschinen-Schnittstelle die dem ausgewählten Handlungsanweisungs-Datensatz entsprechende Handlungsanweisung visualisiert wird, welche einen Menschen zur Vornahme einer Befehlseingabe zum Absenken der Fräs-/Mischwalze auffordert, so dass zumindest ein der Fräs-/Mischwalze zugeordneter Aktor derart betätigt wird, dass die Fräs-/Mischwalze abgesenkt wird. Dabei wird davon ausgegangen, dass nach Überschreiten des vorgegebenen Grenzwertes für das Absenken der Fräs-/Mischwalze noch genügend Raum verbleibt.

Eine bevorzugte Ausführungsform sieht vor, dass die Steuereinrichtung für diese Lektion des Lernmodus derart konfiguriert ist, dass ein bestimmter Betriebsbereich für die Höhe der Fräs-/Mischwalze durch einen unteren minimalen Grenzwert für einen einzuhaltenden Mindestabstand von einem Bezugspunkt der Fräs-/Mischwalze zu der Oberfläche des zu bearbeitenden Bodens definiert wird und in Abhängigkeit von der von einem Menschen nach der Visualisierung der Handlungsanweisung vorgenommenen Befehlseingabe zum Absenken der Fräs-/Mischwalze die der Befehlseingabe entsprechenden Steuerbefehlssignale für den zumindest einen der Fräs-/Mischwalze zugeordneten Aktor nur dann erzeugt werden, wenn die Fräs-/Mischwalze in dem definierten Betriebsbereich höhenverstellt wird, so dass der Mindestabstand zu der Bodenoberfläche eingehalten wird. Dadurch wird sichergestellt, dass das Bedienpersonal nach einer Aufforderung zum Absenken der Fräs-/Mischwalze, wenn der vorgegebene Grenzwert überschritten ist, die Fräs-/Mischwalze nicht unbeabsichtigt in den Boden fahren kann. Dadurch wird die Sicherheit weiter erhöht. Das Bedienpersonal kann somit die Maschinenfunktion der Höheneinstellung der Fräs-/Mischwalze gefahrlos realitätsnah üben.

Die Steuereinrichtung kann derart konfiguriert sein, dass einzelne Handlungsanweisungs-Datensätze nacheinander in Abhängigkeit von einem von der Zustandsüberwachungseinrichtung erfassten Betriebszustand und/oder Betriebsmodus der Antriebe und/oder Aktoren ausgewählt werden können. Wenn eine Lektion mehrere Handlungsanweisungs-Datensätze beinhalten sollte, kann die Steuereinrichtung eine bestimmte Reihenfolge festlegen, in der das Bedienpersonal zu einer bestimmten Befehlseingabe aufgefordert wird.

Eine Ausführungsform sieht vor, dass die Steuereinrichtung derart konfiguriert ist, dass, wenn die von der Zustandsüberwachungseinrichtung erfasste Höhe der Fräs-/Mischwalze in Bezug auf die Bodenoberfläche kleiner als ein Grenzwert für die Höhe ist, für eine vorausgehende Handlungsanweisung aus den Handlungsanweisungs-Datensätzen ein Datensatz ausgewählt und die dem ausgewählten Handlungsanweisungs-Datensatz entsprechende Handlungsanweisung mit der Mensch-Maschinen-Schnittstelle visualisiert wird, welche einen Menschen zunächst zur Vornahme einer Befehlseingabe zum Anheben der Fräswalze auffordert, so dass nach der Befehlseingabe zumindest ein der Fräs-/Mischwalze zugeordneter Aktor derart betätigt wird, dass die Fräs-/Mischwalze angehoben wird. Folglich wird das Bedienpersonal in Abhängigkeit von der Höheneinstellung der Fräs-/Mischwalze nur zu der Aktion aufgefordert, die möglich ist, ohne die Walze in den Boden zu fahren. Wenn das Bedienpersonal dann die Fräs-/Mischwalze angehoben hat, was das Bedienpersonal auch sehen kann, wird das Bedienpersonal automatisch zu der nächsten Übung animiert, die darin liegt, die Fräs-/Mischwalze wieder abzusenken. Die Steuereinrichtung ist hierzu derart konfiguriert, dass für eine der vorausgehenden Handlungsanweisung nachfolgende Handlungsanweisung aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zur Vornahme einer Befehlseingabe zum Absenken der Fräs-/Mischwalze auffordert, so dass zumindest ein der Fräs-/Mischwalze zugeordneter Aktor derart betätigt wird, dass die Fräs-/Mischwalze abgesenkt wird. Das Bedienpersonal kann aber auch nur dann zu der nächsten Übung animiert werden, wenn die Zustandsüberwachungseinrichtung einen definierten Betriebszustand erfasst. Beispielsweise kann eine Animation zum Absenken der Fräs-/Mischwalze nur dann angezeigt werden, wenn die Fräs-/Mischwalze wenigstens um einen vorgegebenen Betrag und/oder eine vorgegebene Höhe angehoben wurde. Somit ist eine weitere Rückkopplung in den Prozess gegeben.

Folglich legt die Steuereinrichtung in Abhängigkeit von dem Betriebszustand, d. h. die Fräswalze befindet sich zunächst in einer abgesenkten Stellung, eine Reihenfolge für die Visualisierung der Datensätze fest, d. h. erst eine Aufforderung für eine Befehlseingabe zum Anheben und dann zum Absenken der Fräs-/Mischwalze. In analoger Betrachtungsweise kann die Steuereinrichtung auch derart konfiguriert sein, dass das Bedienpersonal erst zum Absenken und dann zum Anheben aufgefordert wird, wenn sich die Fräs-/Mischwalze zunächst nicht in einer abgesenkten Stellung, sondern in einer angehobenen Stellung befinden sollte.

Die Steuereinrichtung kann für die oben beschriebene Lektion, die zwei Handlungsanweisungen umfasst, wieder einen bestimmten Betriebsbereich für die Höhe der Fräs-/Mischwalze durch einen unteren minimalen Grenzwert für einen einzuhaltenden Mindestabstand von einem Bezugspunkt der Fräs-/Mischwalze zu der Oberfläche des zu bearbeitenden Bodens definieren und in Abhängigkeit von der von einem Menschen nach der Visualisierung der Handlungsanweisung vorgenommenen Befehlseingabe zum Absenken der Fräs-/Mischwalze die der Befehlseingabe entsprechenden Steuerbefehlssignale für den zumindest einen der Fräs-/Mischwalze zugeordneten Aktor nur dann erzeugen, wenn die Fräs-/Mischwalze in dem definierten Betriebsbereich höhenverstellt wird, so dass der Mindestabstand zu der Bodenoberfläche eingehalten wird.

Die oben beschriebenen Ausführungsformen sind nur als ein Ausführungsbeispiel für mehrere aufeinanderfolgende Handlungsanweisungen zu verstehen. Eine Lektion kann nicht nur zwei, sondern auch eine Vielzahl von aufeinanderfolgenden Handlungsanweisungen umfassen, die ausgewählt werden können, um in einer bestimmten Reihenfolge in Abhängigkeit von unterschiedlichen Betriebszuständen oder Betriebsmodi der Straßenbaumaschine aufgerufen werden zu können.

Eine weitere Ausführungsform der erfindungsgemäßen Straßenbaumaschine verfügt über einen Maschinenrahmen, der von in Arbeitsrichtung linken Hubeinrichtungen, die linken Rädern oder Kettenlaufwerken zugeordnet sind, und in Arbeitsrichtung rechten Hubeinrichtungen, die rechten Rädern oder Kettenlaufwerken zugeordnet sind, getragen wird. Zur Betätigung der linken und rechten Hubeinrichtungen sind Aktoren vorgesehen, um die Höhe und/oder Neigung des Maschinenrahmens und der an dem Maschinenrahmen angeordneten Fräs-/Mischwalze in Bezug auf die Oberfläche des zu bearbeitenden Bodens durch Betätigung der den Hubeinrichtungen zugeordneten Aktoren verstellen zu können.

Der Lernmodus sieht für diese Ausführungsform eine Lektion vor, um die Einstellung der Höhe oder der Querneigung des Maschinenrahmens zu üben. Für die Lektion der Einstellung der Höhe des Maschinenrahmens kann die Steuereinrichtung derart konfiguriert sein, dass, wenn die von der Zustandsüberwachungseinrichtung erfasste Höhe der höhenverstellbaren Fräs-/Mischwalze in Bezug auf die Bodenoberfläche kleiner als ein vorgegebener Grenzwert für die Höhe ist, aus den in der Speichereinrichtung gespeicherten Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zur Vornahme einer Befehlseingabe zum Anheben des Maschinenrahmens auffordert, so dass nach der Befehlseingabe die den Hubeinrichtungen zugeordnete Aktoren derart betätigt werden, dass der Maschinenrahmen angehoben wird. Das Bedienpersonal kann also eine Höheneinstellung vornehmen, ohne dass die Fräs-/Mischwalze in den Boden eindringen könnte.

Bei der Höhenverstellung der den Rädern oder Ketten zugeordneten Hubeinrichtungen ist neben der Position der höhenverstellbaren Fräs-/Mischwalze über der Bodenoberfläche zusätzlich die Höhe des die Fräswalze umgebenden Fräswalzengehäuses über der Bodenoberfläche zu beachten.

Für den Fall, dass die von der Zustandsüberwachungseinrichtung erfasste Höhe der höhenverstellbaren Fräs-/Mischwalze in Bezug auf die Bodenoberfläche größer als ein vorgegebener Grenzwert für die Höhe ist, kann die Steuereinrichtung derart konfiguriert sein, dass aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zur Vornahme einer Befehlseingabe zum Absenken des Maschinenrahmens auffordert, so dass nach der Befehlseingabe die den Hubeinrichtungen zugeordnete Aktoren derart betätigt werden, dass der Maschinenrahmen abgesenkt wird. Dabei ist nicht zu befürchten, dass die Fräs-/Mischwalze sofort in den Boden eindringt, da die Höhe der Fräs-/Mischwalze größer als ein vorgegebener Grenzwert ist. Dies kann aber in Analogie zu der direkten Höheneinstellung der Fräs-/Mischwalze dadurch ausgeschlossen werden, dass ein bestimmter Betriebsbereich für die Höhe der Fräs-/Mischwalze durch einen unteren minimalen Grenzwert für einen einzuhaltenden Mindestabstand von einem Bezugspunkt der Fräs-/Mischwalze zu der Oberfläche des zu bearbeitenden Bodens definiert wird und in Abhängigkeit von der nach der Visualisierung der Handlungsanweisung von einem Menschen vorgenommenen Befehlseingabe die der Befehlseingabe entsprechenden Steuerbefehlssignale für die den Hubeinrichtungen zugeordneten Aktoren nur dann erzeugt werden, wenn die Fräs-/Mischwalze in dem definierten Betriebsbereich höhenverstellt wird, so dass der Mindestabstand zu der Bodenoberfläche eingehalten wird.

Während beim Einstellen der Höhe des Maschinenrahmens nur das Risiko des unbeabsichtigten Eindringens der Fräs-/Mischwalze in den Boden besteht, kann eine unsachgemäße Einstellung der Neigung der Baumaschine noch zu Stabilitätsproblemen führen. Im schlimmsten Fall kann die Baumaschine umkippen. Dies könnte ohne ein entsprechendes Sicherheitssystem dann passieren, wenn die Baumaschine kurz vor dem Kipppunkt durch falsche Betätigung des Bedienelements auf die falsche Seite gekippt wird. Daher sollte sich das Bedienpersonal insbesondere mit der Einstellung der Neigung vertraut machen können.

Zur Vermeidung von Stabilitätsproblemen beim Lernen der Höheneinstellung sieht eine weitere Ausführungsform vor, dass die Zustandsüberwachungseinrichtung derart konfiguriert ist, dass auch die Querneigung des Maschinenrahmens, insbesondere die Querneigung in Bezug auf die Oberfläche des zu bearbeitenden Bodens, oder die Querneigung relativ zur Horizontalen erfasst wird. Die Querneigung des Maschinenrahmens relativ zur Horizontalen kann mittels eines Neigungssensors der Zustandsüberwachungseinrichtung erfasst werden, die Querneigung des Maschinenrahmens relativ zum Untergrund kann von der Zustandsüberwachungseinrichtung durch die Erfassung des Betriebszustands der Hubeinrichtungen, insbesondere durch einen Vergleich des Hubzustands der einzelnen Hubeinrichtungen untereinander ermittelt werden. Die Steuereinrichtung ist für diese Lektion des Lernmodus derart konfiguriert, dass, wenn die von der Zustandsüberwachungseinrichtung erfasste Querneigung des Maschinenrahmens eine Neigung auf die rechte Seite ist, in Abhängigkeit von der Querneigung aus den in der Speichereinrichtung gespeicherten Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zur Vornahme einer Befehlseingabe zum Rollen des Maschinenrahmens auf die in Arbeitsrichtung linke Seite der Straßenfräsmaschine auffordert, so dass nach der Befehlseingabe die den in Arbeitsrichtung linken Hubeinrichtungen zugeordneten Aktoren derart betätigt werden, dass der Maschinenrahmen auf der linken Seite abgesenkt wird, und/oder die den in Arbeitsrichtung rechten Hubeinrichtungen zugeordneten Aktoren derart betätigt werden, dass der Maschinenrahmen auf der rechten Seite angehoben wird. Wenn das Bedienpersonal dieser Handlungsanweisung folgt, wird das Bedienpersonal nicht das Bedienelement zum Rollen auf die rechte Seite betätigen, was zu einer Instabilität der Straßenbaumaschine führen würde.

Für den Fall, dass die von der Zustandsüberwachungseinrichtung erfasste Querneigung des Maschinenrahmens eine Neigung auf die linke Seite ist, wählt die Steuereinrichtung aus den Handlungsanweisungs-Datensätzen einen Handlungsanweisungs-Datensatz aus und visualisiert die dem ausgewählten Handlungsanweisungs-Datensatz entsprechende Handlungsanweisung mit der Mensch-Maschinen-Schnittstelle, welche einen Menschen zur Vornahme einer Befehlseingabe zum Rollen des Maschinenrahmens auf die in Arbeitsrichtung rechte Seite der Straßenfräsmaschine auffordert, so dass nach der Befehlseingabe die den in Arbeitsrichtung rechten Hubeinrichtungen zugeordneten Aktoren derart betätigt werden, dass der Maschinenrahmen auf der rechten Seite abgesenkt wird, und/oder die den in Arbeitsrichtung linken Hubeinrichtungen zugeordneten Aktoren derart betätigt werden, dass der Maschinenrahmen auf der linken Seite angehoben wird.

Folglich wird in der Lektion "Einstellung der Querneigung des Maschinenrahmens" mit der Erfassung der Maschinenneigung durch die Zustandsüberwachungsvorrichtung und die Vornahme nur einer bestimmten Handlungsanweisung in Abhängigkeit von dem jeweiligen Betriebszustand der betreffenden Aktoren das Risiko einer Instabilität verringert. Bei der Einstellung der Neigung kann auch wieder eine bestimmte Reihenfolge festgelegt werden. Beispielsweise kann das Bedienpersonal in Abhängigkeit von der Ausgangsstellung der Hubeinrichtungen bzw. des Maschinenrahmens zunächst zum Rollen der Maschine auf die eine Seite und dann zum Rollen auf die andere Seite aufgefordert werden.

Bei der Verstellung der Querneigung des Maschinenrahmens besteht grundsätzlich auch das Risiko, dass die Fräs-/Mischwalze unbeabsichtigt in den Boden eindringt oder das Fräswalzengehäuse mit dem Boden kollidiert. Die Steuereinrichtung kann daher auch für diese Lektion des Lernmodus derart konfiguriert sein, dass ein bestimmter Betriebsbereich für die Höhe der Fräs-/Mischwalze durch einen unteren minimalen Grenzwert für einen einzuhaltenden Mindestabstand von einem Bezugspunkt der Fräs-/Mischwalze zu der Oberfläche des zu bearbeitenden Bodens definiert wird und in Abhängigkeit von der nach der Visualisierung der Handlungsanweisung von einem Menschen vorgenommenen Befehlseingabe die der Befehlseingabe entsprechenden Steuerbefehlssignale für die den Hubeinrichtungen zugeordneten Aktoren nur dann erzeugt werden, wenn die Fräs-/Mischwalze in dem definierten Betriebsbereich höhenverstellt wird, so dass der Mindestabstand zu der Bodenoberfläche eingehalten wird.

Die Steuereinrichtung kann auch noch derart konfiguriert sein, dass ein bestimmter Betriebsbereich für die Querneigung des Maschinenrahmens durch einen Grenzwert für einen maximale Neigung definiert wird und in Abhängigkeit von der nach der Visualisierung der Handlungsanweisung von einem Menschen vorgenommenen Befehlseingabe die der Befehlseingabe entsprechenden Steuerbefehlssignale für die den Hubeinrichtungen zugeordneten Aktoren nur dann erzeugt werden, wenn der Maschinenrahmen in dem definierten Betriebsbereich gekippt wird, so dass die maximale Neigung nicht überschritten wird.

Vor der Durchführung einer die Veränderung der Querneigung des Maschinenrahmens betreffenden Übung kann auch vorgesehen sein, das Bedienpersonal dazu aufzufordern, den Maschinenrahmen zunächst in eine stabile Ausgangsposition zu bringen, insbesondere in eine horizontale Position oder eine bodenparallele Position, so dass das Bedienpersonal den Maschinenrahmen dann gefahrlos auf die eine oder andere Seite rollen kann. Für den Fall, dass die von der Zustandsüberwachungseinrichtung erfasste Querneigung des Maschinenrahmens eine Neigung auf die linke oder rechte Seite ist, d.h. der Maschinenrahmen nicht horizontal bzw. bodenparallel ausgerichtet ist, kann die Steuereinrichtung aus den Handlungsanweisungs-Datensätzen einen Handlungsanweisungs-Datensatz auswählen und die dem ausgewählten Handlungsanweisungs-Datensatz entsprechende Handlungsanweisung mit der Mensch-Maschinen-Schnittstelle visualisieren, welche einen Menschen zur Vornahme einer Befehlseingabe zum Rollen des Maschinenrahmens auf die in Arbeitsrichtung rechte bzw. linke Seite der Straßenfräsmaschine solange auffordert, so dass nach der Befehlseingabe die den in Arbeitsrichtung rechten Hubeinrichtungen zugeordneten Aktoren solange betätigt werden, bis der Maschinenrahmen in eine horizontale bzw. bodenparallele Position verfahren ist, und/oder die den in Arbeitsrichtung linken Hubeinrichtungen zugeordneten Aktoren solange betätigt werden, bis der Maschinenrahmen in eine horizontale bzw. bodenparallele Position verfahren ist.

Während die oben beschriebenen Lektionen des Lernmodus die Einstellung der Höhe und Neigung des Maschinenrahmens betreffen, kann eine Lektion des Lernmodus auch das Lenken der Räder oder Laufwerke sein, wobei die Steuereinrichtung für diese Lektion des Lernmodus derart konfiguriert sein kann, dass, wenn die von Zustandsüberwachungseinrichtung erfasste Stellung der Räder oder Kettenlaufwerke eine nach rechts eingeschlagene Stellung der Räder oder Kettenlaufwerke ist, aus den in der Speichereinrichtung gespeicherten Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zur Vornahme einer Befehlseingabe zum Lenken der vorderen Räder oder Kettenlaufwerke nach in Arbeitsrichtung links auffordert, so dass nach der Befehlseingabe die den Rädern oder Kettenlaufwerken zugeordneten Aktoren derart betätigt werden, dass die Räder nach links einschlagen. Folglich wird das Bedienpersonal in Abhängigkeit von dem Betriebszustand der betreffenden Aktoren wieder nur zu der Übung aufgefordert, die bei der momentanen Stellung der Räder sinnvoll erscheint.

Für den Fall, dass die von Zustandsüberwachungseinrichtung erfasste Stellung der Räder oder Kettenlaufwerke eine nach links eingeschlagene Stellung der Räder oder Kettenlaufwerke ist, wird aus den von der Speichereinrichtung gespeicherten Handlungsanweisungs-Datensätzen ein Datensatz ausgewählt und die dem ausgewählten Handlungsanweisungs-Datensatz entsprechende Handlungsanweisung mit der Mensch-Maschinen-Schnittstelle visualisiert, welche einen Menschen zur Vornahme einer Befehlseingabe zum Lenken der vorderen Räder oder Kettenlaufwerke nach in Arbeitsrichtung rechts auffordert, so dass nach der Befehlseingabe die den Rädern oder Kettenlaufwerken zugeordneten Aktoren derart betätigt werden, dass die Räder nach rechts einschlagen.

Ein alternative Ausführungsform sieht vor, dass für das Lernen des Lenkens die Räder oder Kettenlaufwerke zunächst in eine Geradeausstellung gebracht werden sollen. Die Steuereinrichtung ist daher derart konfiguriert ist, dass, wenn die von Zustandsüberwachungseinrichtung erfasste Stellung der Räder oder Kettenlaufwerke eine nach rechts oder links eingeschlagene Stellung ist, aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zum Geradeausstellen der vorderen Räder in Arbeitsrichtung auffordert, so dass nach der Befehlseingabe die den vorderen Rädern oder Kettenlaufwerken zugeordneten Aktoren derart betätigt werden, dass die vorderen Räder in Arbeitsrichtung geradeausgestellt werden. Diese Handlungsanweisung kann anderen Handlungsanweisungen, die beispielweise die Höheneinstellung der Fräs-/oder Mischwalze oder des Maschinerahmens betreffen, von der Steuereinrichtung in der Reihenfolge vorangestellt werden, um die Straßenbaumaschine für die einzelnen Übungen zunächst in eine stabile Ausgangsposition zu bringen.

Die Straßenbaumaschine kann zwei in Arbeitsrichtung vordere Räder oder Kettenlaufwerke und zwei in Arbeitsrichtung hintere Räder oder Kettenlaufwerke aufweisen, wobei die Steuereinrichtung die Einstellung unterschiedlicher Lenkmodi vorsieht und die Zustandsüberwachungseinrichtung derart konfiguriert ist, dass die Stellung der vorderen und hinteren Räder oder Kettenlaufwerke und der eingestellte Lenkmodus erfasst wird. Die Straßenbaumaschine erlaubt, dass in dem Lernmodus das Bedienpersonal in Abhängigkeit von dem eingestellten Lenkmodus zu bestimmten Lenkbewegungen aufgefordert wird.

Die Steuereinrichtung kann derart konfiguriert sein, dass, wenn der von Zustandsüberwachungseinrichtung erfasste Lenkmodus eine Lenkung nur der vorderen Räder oder Kettenlaufwerke ist, aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zum Lenken nur der vorderen Räder oder Kettenlaufwerke auffordert, so dass nach der Befehlseingabe die den vorderen Rädern oder Kettenlaufwerken zugeordneten Aktoren derart betätigt werden, dass nur die vorderen Räder oder Kettenlaufwerke gelenkt werden. Dabei ist zu berücksichtigen, dass die Straßenbaumaschine zum Lenken der vorderen Räder oder Kettenlaufwerke über ein anderes Bedienelement verfügen oder eine andere Stellung eines Bedienelements vorsehen kann als zum Lenken der hinteren Räder oder Laufwerke. Die Straßenbaumaschine zeigt dem Bedienpersonal also das richtige Bedienelement bzw. dessen richtige Bedienung.

Für den Fall, dass der von der Zustandsüberwachungseinrichtung erfasste Lenkmodus eine Lenkung sowohl der vorderen als auch der hinteren Räder oder Kettenlaufwerke in dieselbe Richtung bzw. in entgegensetzte Richtungen ist, wird aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert, welche einen Menschen zum Lenken sowohl der vorderen als auch der hinteren Räder oder Kettenlaufwerke in die dieselbe Richtung bzw. in entgegensetzte Richtungen auffordert, so dass nach der Befehlseingabe die den Rädern oder Kettenlaufwerken zugeordneten Aktoren derart betätigt werden, dass die vorderen und hinteren Räder oder Kettenlaufwerke in die dieselbe Richtung bzw. in entgegengesetzte Richtungen gelenkt werden.

Wenn der von der Zustandsüberwachungseinrichtung erfasste Lenkmodus eine Lenkung der vorderen und hinteren Räder oder Kettenlaufwerke unabhängig voneinander ist, wird aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert, welche einen Menschen zum Lenken der vorderen und hinteren Räder oder Kettenlaufwerke unabhängig voneinander auffordert, so dass nach der Befehlseingabe die den vorderen bzw. hinteren Rädern oder Kettenlaufwerken zugeordneten Aktoren derart betätigt werden, dass die vorderen und hinteren Räder oder Kettenlaufwerke unabhängig voneinander gelenkt werden. Diese Handlungsanweisungen können zwei zu visualisierende Aufforderungen an das Bedienpersonal beinhalten, wobei die eine Aufforderung die Betätigung eines ersten Bedienelements und die andere Aufforderung die Betätigung eines zweiten Bedienelements sein kann oder die Aufforderung ein Bedienelement in unterschiedliche Stellungen zu bringen, um die vorderen und hinteren Laufwerke unabhängig voneinander lenken zu können.

Die Antriebe und/oder Aktoren für die lenkbaren Räder oder Kettenlaufwerke und die Höheneinstellung des Maschinenrahmens bzw. der Fräs-/Mischwalze können hydraulische Antriebe oder Aktoren, beispielsweise mit Hydraulikflüssigkeit betriebene Hydraulikmotoren oder Kolben-Zylinder-Anordnungen sein. Die Straßenbaumaschine kann über eine zentrale Antriebeinrichtung verfügen, die einen Antriebsmotor, insbesondere Verbrennungsmotor, umfassen kann, und die Baumaschine kann über mindestens eine Hydraulikpumpe und mindestens ein Pumpenverteilergetriebe zur Versorgung der Antriebe und/oder Aktoren mit Hydraulikflüssigkeit verfügen.

Eine Ausführungsform sieht vor, dass die Zustandsüberwachungseinrichtung derart konfiguriert ist, dass der Betrieb der Antriebeinrichtung erfasst wird, d. h. festgestellt wird, ob die Antriebe und/oder Aktoren mit Hydraulikflüssigkeit versorgt werden. Die Steuereinrichtung kann bei dieser Ausführungsform derart konfiguriert sein, dass eine Auswahl eines bestimmten Handlungsanweisungs-Datensatzes aus den Handlungsanweisungs-Datensätzen nur dann getroffen und die dem ausgewählten Handlungsanweisungs-Datensatz entsprechende Handlungsanweisung mit der Mensch-Maschinen-Schnittstelle nur dann visualisiert wird, wenn die Zustandsüberwachungseinrichtung den Betrieb des Antriebsmotors erfasst. Dadurch wird sichergesellt, dass das Bedienpersonal nur dann zu einer Befehlseingabe aufgefordert wird, wenn die betreffenden Antriebe und/oder Aktoren nach der Befehlseingabe auch tatsächlich betrieben werden, um die jeweilige Maschinenfunktion auszuführen.

Wenn die Zustandsüberwachungseinrichtung den Betrieb des Antriebsmotors hingegen nicht erfasst, kann die Steuereinrichtung aus den Handlungsanweisungs-Datensätzen ein Handlungsanweisungs-Datensatz auswählen und mit der Mensch-Maschinen-Schnittstelle die dem ausgewählten Handlungsanweisungs-Datensatz entsprechende Handlungsanweisung visualisieren, welche einen Menschen zur Vornahme einer Befehlseingabe zum Einschalten des Antriebsmotors bzw. der Antriebeinrichtung, insbesondere des Verbrennungsmotors, auffordert, so dass das Bedienpersonal zuerst den Antriebsmotor einschaltet, bevor eine bestimmte Maschinenfunktion ausgeführt wird.

Die Mensch-Maschinen-Schnittstelle kann ein oder mehrere mechanische oder elektrische Bedienelemente, die unterschiedliche Betriebsstellungen einnehmen können, und/oder mehrere Anzeigen in der unterschiedlichsten Ausführungsform umfassen. Bedienelemente können Steuerknüppel (Joystick), Steuerräder, Pedale, Schalter, Taster oder dergleichen sein. Anzeigen können Displays, Leuchtfelder, Signallampen oder dergleichen sein. Die Mensch-Maschinen-Schnittstelle kann auch ein berührungsempfindlicher Bildschirm (Touchscreen) sein oder einen solchen Bildschirm umfassen.

Die Mensch-Maschinen-Schnittstelle kann zur Vornahme von Befehlseingaben für die Höheneinstellung der Fräs-/Mischwalze gegenüber dem Maschinenrahmen ein Bedienelement aufweisen, dass derart ausgebildet ist, dass das Bedienelement eine Neutralstellung, eine erste Stellung und eine zweite Stellung einnehmen kann, wobei die Steuereinrichtung derart ausgebildet ist, dass kein Steuerbefehlssignal für den zumindest einen der Fräs-/Mischwalze zugeordneten Aktor erzeugt wird, so dass die Fräs-/Mischwalze in der momentan eingestellten Position verbleibt, wenn sich das Bedienelement in der Neutralstellung befindet. Die Steuereinrichtung kann weiterhin derart ausgebildet sein, dass ein Steuerbefehlssignal für den zumindest einen der Fräs-/Mischwalze zugeordneten Aktor erzeugt wird, so dass die Fräs-/Mischwalze angehoben wird, wenn sich das Bedienelement in der ersten Stellung befindet, und ein Steuerbefehlssignal für den zumindest einen der Fräs-/Mischwalze zugeordneten Aktor erzeugt wird, so dass die Fräs-/Mischwalze abgesenkt wird, wenn sich das Bedienelement in der zweiten Stellung befindet. Bei einem derartigen Bedienelement kann die Visualisierung der Handlungsanweisungen auf der Anzeige durch eine grafische Darstellung (Piktogramm) erfolgen, die dem Bedienpersonal zeigt, wie das Bedienelement zu betätigen ist, um die gewünschte Maschinenfunktion auszuführen.

Zur Vornahme von Befehlseingaben für die Lenkung nur der vorderen Räder oder Kettenlaufwerke, der vorderen und hinteren Räder oder Kettenlaufwerke in dieselbe Richtung oder der vorderen und hinteren Räder oder Kettenlaufwerke in entgegengesetzte Richtungen kann die Mensch-Maschinen-Schnittstelle ein als Lenkrad ausgebildetes Bedienelement aufweisen. Für die Lenkung der vorderen und hinteren Räder oder Kettenlaufwerke unabhängig voneinander kann die Mensch-Maschinen-Schnittstelle ein als Lenkrad ausgebildetes Bedienelement für Lenkung der vorderen Räder oder Kettenlaufwerke und ein als Steuerknüppel ausgebildetes Bedienelement für die Lenkung der hinteren Räder oder Kettenlaufwerke aufweisen.

Die abgeschlossenen Lektionen können gespeichert werden, um abfragen zu können, ob eine bestimmte Lektion bereits angeboten wurde. Insbesondere bei den Lenkmodi kann die Maschine sich "merken" welcher Lenkmodus schon gelehrt wurde und dann die übrigen Lenkmodi als nächste Lektion anbieten.

Nach der Beendigung einer Lektion sollte sich die Straßenbaumaschine in einem sicheren Betriebszustand befinden, um für einen bevorstehenden Arbeitseinsatz vorbereitet zu sein. Daher können einige oder alle der Lektionen zum Üben der Maschinenfunktionen so gestaltet sein, dass sich die Straßenbaumaschine zum Abschluss der jeweiligen Lektion in einem sicheren Betriebszustand befindet und/oder es können sich an die eigentlichen Lektionen zum Üben der Maschinenfunktionen noch Handlungsanweisungen an das Bedienpersonal anschließen, um die Straßenbaumaschine in einen sicheren Betriebszustand zu bringen.

Um die Straßenbaumaschine in einen sicheren Betriebszustand zu bringen, kann das Bedienpersonal dazu aufgefordert werden, die Querneigung des Maschinenrahmens mittels der Hubeinrichtungen derart einzustellen, dass die Baumaschine möglichst waagerecht oder parallel zum Untergrund ausgerichtet ist. Darüber hinaus kann das Bedienpersonal dazu aufgefordert werden, die Höhe des Maschinenrahmens mittels der Hubeinrichtungen derart einzustellen, dass der Abstand der Fräs-/Mischwalze bzw. des Fräswalzengehäuses zum Untergrund ausreichend ist, so dass die Baumaschine sofort losfahren kann.

Auch können einige oder alle Lektionen zum Üben der Maschinenfunktionen so eingerichtet sein, dass zum Abschluss der Lektion die Straßenbaumaschine für einen besonderen Arbeitseinsatz vorbereitet ist, oder es können sich an die eigentlichen Lektionen zum Üben noch Handlungsanweisungen anschließen, um die Baumaschine für einen besonderen Arbeitseinsatz vorzubereiten. Zur Vorbereitung auf einen besonderen Arbeitseinsatz kann das Bedienpersonal beispielsweise dazu aufgefordert werden, einen bestimmten Lenkmodus, beispielsweise einen Lenkmodus, bei dem die Vorder- und Hinterräder in entgegengesetzte Richtungen lenken, einzustellen.

Im Folgenden werden mehrere Ausführungsbeispiele der Erfindung unter Bezugnahme auf die Zeichnungen näher erläutert.

Es zeigen:
- Fig. 1: ein Ausführungsbeispiel einer erfindungsgemäßen selbstfahrenden Straßenbaumaschine in der Seitenansicht,
- Fig. 2: ein Schaubild zur Veranschaulichung der Funktionsweise der Steuereinrichtung zur Visualisierung von Handlungsanweisungen in Abhängigkeit von dem Betriebszustand und Betriebsmodus von Antrieben und Aktoren der Straßenbaumaschine,
- Fig. 3: ein Ausführungsbeispiel eines als Lenkrad ausgebildeten Bedienelements der Mensch-Maschinen-Schnittstelle der Straßenbaumaschine zum Lenken der Räder,
- Fig. 4: ein Ausführungsbeispiel eines als Joystick ausgebildeten Bedienelements der Mensch-Maschinen-Schnittstelle der Straßenbaumaschine zum Einstellen der Höhe der Fräs-/Mischwalze und der Höhe und Neigung des Maschinenrahmens gegenüber der Bodenoberfläche,
- Fig. 5: das Bedienelement von Fig. 4 in der Seitenansicht,
- Fig. 6: einen Ablaufplan zur Veranschaulichung des Lernmodus der Straßenbaumaschine,
- Fig. 7A: ein Schaubild zur Veranschaulichung der Visualisierung einer ersten Handlungsanweisung für die Einstellung der Höhe der Fräs-/Mischwalze gegenüber der Bodenoberfläche,
- Fig. 7B: ein Schaubild zur Veranschaulichung der Visualisierung einer zweiten Handlungsanweisung für die Einstellung der Höhe der Fräs-/Mischwalze gegenüber der Bodenoberfläche,
- Fig. 7C: ein Schaubild zur Veranschaulichung der Visualisierung einer dritten Handlungsanweisung für die Einstellung der Höhe der Fräs-/Mischwalze gegenüber der Bodenoberfläche,
- Fig. 8A: ein Schaubild zur Veranschaulichung der Visualisierung einer ersten Handlungsanweisung eines weiteren Ausführungsbeispiels für die Einstellung der Höhe der Fräs-/Mischwalze gegenüber der Bodenoberfläche,
- Fig. 8B: ein Schaubild zur Veranschaulichung der Visualisierung einer zweiten Handlungsanweisung für die Einstellung der Höhe der Fräs-/Mischwalze gegenüber der Bodenoberfläche,
- Fig. 8C: ein Schaubild zur Veranschaulichung der Visualisierung einer dritten Handlungsanweisung für die Einstellung der Höhe der Fräs-/Mischwalze gegenüber der Bodenoberfläche,
- Fig. 9A: ein Schaubild zur Veranschaulichung der Visualisierung einer ersten Handlungsanweisung für die Einstellung der Höhe des Maschinenrahmens gegenüber der Bodenoberfläche,
- Fig. 9B: ein Schaubild zur Veranschaulichung der Visualisierung einer zweiten Handlungsanweisung für die Einstellung der Höhe des Maschinenrahmens gegenüber der Bodenoberfläche,
- Fig. 9C: ein Schaubild zur Veranschaulichung der Visualisierung einer dritten Handlungsanweisung für die Einstellung der Höhe des Maschinenrahmens gegenüber der Bodenoberfläche,
- Fig. 10A: ein Schaubild zur Veranschaulichung der Visualisierung einer ersten Handlungsanweisung für die Einstellung der Neigung des Maschinenrahmens gegenüber der Bodenoberfläche,
- Fig. 10B: ein Schaubild zur Veranschaulichung der Visualisierung einer zweiten Handlungsanweisung für die Einstellung der Neigung des Maschinenrahmens gegenüber der Bodenoberfläche,
- Fig. 10C: ein Schaubild zur Veranschaulichung der Visualisierung einer dritten Handlungsanweisung für die Einstellung der Neigung des Maschinenrahmens gegenüber der Bodenoberfläche,
- Fig. 11A: ein Schaubild zur Veranschaulichung der Visualisierung einer ersten Handlungsanweisung für die Einstellung der Stellung der vorderen Räder,
- Fig. 11B: ein Schaubild zur Veranschaulichung der Visualisierung einer zweiten Handlungsanweisung für die Einstellung der Stellung der vorderen Räder,
- Fig. 11C: ein Schaubild zur Veranschaulichung der Visualisierung einer dritten Handlungsanweisung für die Einstellung der Stellung der vorderen Räder,
- Fig. 12A: ein Schaubild zur Veranschaulichung der Visualisierung einer Handlungsanweisung für die Einstellung der Stellung der Räder in einem Lenkmodus "Vorderradlenkung",
- Fig. 12B: ein Schaubild zur Veranschaulichung der Visualisierung einer Handlungsanweisung für die Einstellung der Stellung der Räder in einem Lenkmodus "Vorderrad- und Hinterradlenkung" in entgegengesetzte Richtungen,
- Fig. 12C: ein Schaubild zur Veranschaulichung der Visualisierung einer Handlungsanweisung für die Einstellung der Stellung der Räder in einem Lenkmodus "Vorderrad- und Hinterradlenkung" in dieselbe Richtung,
- Fig. 12D: ein Schaubild zur Veranschaulichung der Visualisierung einer ersten Handlungsanweisung für die Einstellung der Stellung der Räder in einem Lenkmodus, in dem die vorderen Räder unabhängig von den hinteren Rädern gelenkt werden.

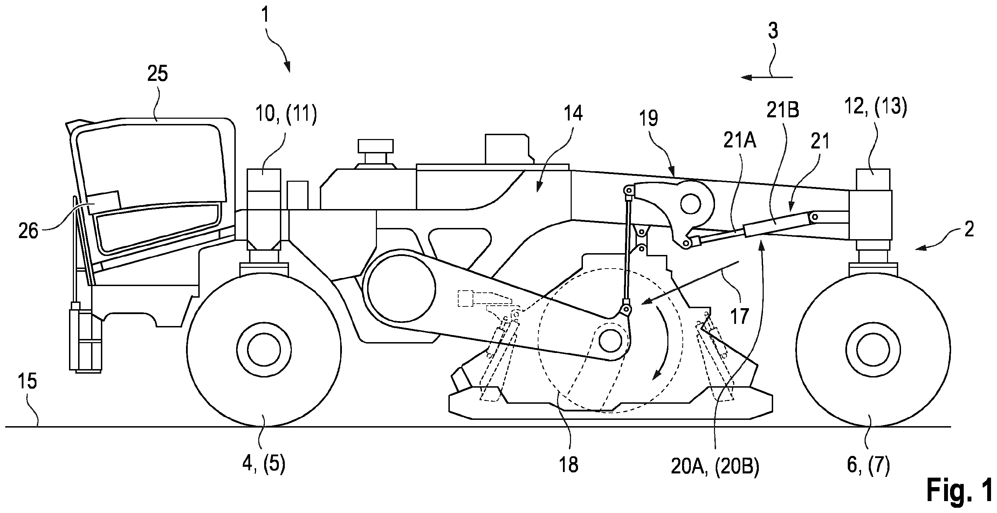

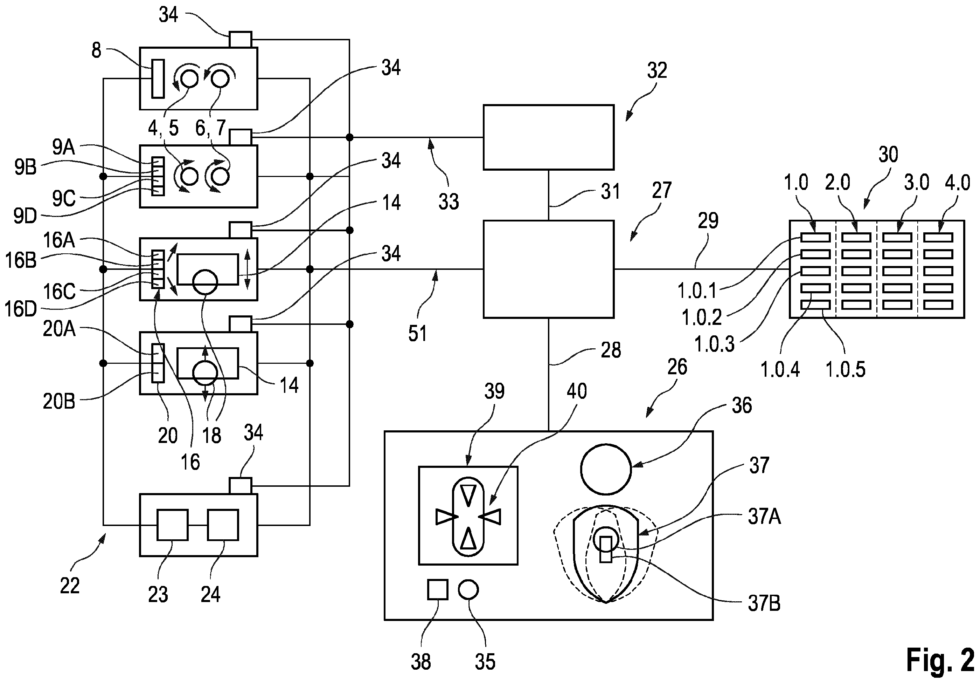

Fig. 1 zeigt als ein Beispiel für eine selbstfahrende Straßenbaumaschine 1 einen Recycler in der Seitenansicht. Der Recycler ist in der EP 2 977 514 B1 im Einzelnen beschrieben. Fig. 2 zeigt ein Schaubild zur Veranschaulichung der einzelnen Komponenten und Maschinenfunktionen der Straßenbaumaschine.

Die Straßenbaumaschine weist ein Fahrwerk 2 auf, das zwei in Arbeitsrichtung 3 vordere Räder 4, 5 und zwei hintere Räder 6, 7 umfasst. Die Räder werden jeweils von einem in Fig. 1 nicht dargestellten Antrieb angetrieben, beispielsweise einem Hydraulikmotor. Bei dem Recycler sind sowohl die vorderen als auch die hinteren Räder 4, 5 bzw. 6, 7 lenkbar. Die Lenkung erfolgt mit den Rädern zugeordneten Aktoren, die in Fig. 1 nicht dargestellt sind. Fig. 2 zeigt die Antriebe 8 zum Antreiben der Räder und die Aktoren 9A, 9B zum Lenken der vorderen Räder 4, 5 und die Aktoren 9C, 9D zum Lenken der hinteren Räder 6, 7 in stark vereinfachter schematischer Darstellung. Die Aktoren zum Lenken der Räder können Kolben-/Zylinder-Anordnungen sein.

An den Rädern 4, 5, 6, 7 sind jeweils Hubeinrichtungen 10, 11, 12, 13 befestigt, die einen Maschinenrahmen 14 tragen, so dass der Maschinenrahmen 14 durch Einfahren bzw. Ausfahren der Hubeinrichtungen in der Höhe und/oder Neigung gegenüber der Oberfläche 15 des zu bearbeitenden Bodens verstellbar ist. Die Hubeinrichtungen umfassen in Fig. 1 nicht dargestellte Aktoren, die hydraulisch betriebene Kolben-Zylinder-Anordnungen sind. Fig. 2 zeigt die Aktoren 16A, 16B der in Arbeitsrichtung 3 linken Hubeinrichtungen 10, 12 und die Aktoren 16C, 16D der in Arbeitsrichtung 3 rechten Hubeinrichtungen 11, 13 in stark vereinfachter schematischer Darstellung.

Zwischen den Rädern 4, 5, 6, 7 ist an dem Maschinenrahmen ein nach unten offenes Walzengehäuse 17 angeordnet, welches einen Fräs-/Mischraum bildet und in dem sich eine Fräs-/Mischwalze 18 befindet. Zur Einstellung der Höhe der Fräs-/Mischwalze 18 gegenüber dem Maschinenrahmen 14 (Frästiefe) ist eine Höheneinstelleinrichtung 19 vorgesehen, die bei dem vorliegenden Ausführungsbeispiel als Aktoren 20A, 20B zu beiden Seiten des Maschinenrahmens 14 angeordnete hydraulisch betriebene Kolben-Zylinder-Anordnungen 21 jeweils mit einem Kolben 21A und einem Zylinder 21B umfasst. Fig. 2 zeigt die Aktoren 20A, 20B der Höheneinstelleinrichtung 19 in stark vereinfachter schematischer Darstellung. Durch Betätigung der Kolben 21A der Kolben-Zylinder-Anordnungen 21 kann die Höhe der Fräs-/Mischwalze 18 in der Höhe gegenüber dem Maschinenrahmen 14 bzw. der Bodenoberfläche 15 eingestellt werden, wobei sich die Achse der Fräs-/Mischwalze 18 auf einer Kreisbahn bewegt. Eine Höheneinstellung der Fräs-/Mischwalze 18 gegenüber der Bodenoberfläche 15 ist alternativ oder zusätzlich auch durch Einfahren bzw. Ausfahren der Hubeinrichtungen 10, 11, 12, 13 möglich.

Die Antriebe 8 und Aktoren 9A, 9B, 9C, 9D bzw. 16A, 16B, 16C, 16D bzw. 20A, 20Bzum Antreiben und Lenken der Räder 4, 5, 6, 7 und die Höheneinstellung des Maschinenrahmens 14 bzw. der Fräs-/Mischwalze 18 werden über Hydraulikleitungen 22 mit Hydraulikflüssigkeit versorgt, die von mindestens einer Hydraulikpumpe 23 bereitgestellt wird, welche von einem Verbrennungsmotor 24 angetrieben wird (Fig. 2).

Am Maschinenrahmen 14 befindet sich der Fahrerstand 25, an dem eine Mensch-Maschinen-Schnittstelle 26 für das Bedienpersonal vorgesehen ist.

Die Straßenbaumaschine verfügt über eine Steuereinrichtung 27, die derart konfiguriert ist, dass Steuerbefehlssignale für die jeweils den Rädern 4, 5, 6, 7, den Hubeinrichtungen 10, 11, 12, 13 und der Höheneinstelleinrichtung 19 zugeordneten Antrieben 8 bzw. Aktoren 9A, 9B, 9C, 9D bzw. 16A, 16B, 16C, 16D bzw. 20A, 20B und Steuerbefehlssignale für den Verbrennungsmotor 24 sowie andere nicht dargestellte Komponenten der Straßenbaumaschine erzeugt werden. Die Steuereinrichtung 27 kann mehrere Steuereinheiten umfassen, von denen eine Steuereinheit oder mehrere Steuereinheiten Bestandteil einer nicht dargestellten zentralen Steuereinrichtung der Baumaschine sein können. Die Steuereinrichtung kann beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen, um die Ansteuerung der Antriebe und Aktoren auszuführen. Auf den Hardware-Komponenten kann ein Datenverarbeitungsprogramm (Software) laufen.

Die Steuereinrichtung 27 ist über eine Datenleitung 28 mit der Mensch-Maschinen-Schnittstelle 26 und über eine Datenleitung 29 mit einer Speichereinrichtung 30 verbunden, so dass die Steuereinrichtung Daten aus der Speichereinrichtung auslesen kann. Die Speichereinrichtung 30 kann aber auch Bestandteil der Steuereinrichtung sein. Darüber hinaus ist die Steuereinrichtung 27 über eine Datenleitung 31 mit einer Zustandsüberwachungseinrichtung 32 verbunden, die aber auch Bestandteil der Steuereinrichtung 27 oder einer zentralen Steuereinrichtung sein kann. Die Steuerbefehlssignale der Steuereinrichtung 27 für die Antriebe oder Aktoren werden über Datenleitungen 51 übertragen

Die Zustandsüberwachungsvorrichtung 32 ist über Datenleitungen 33 mit den Antrieben 8 und Aktoren 9A, 9B, 9C, 9D bzw. 16A, 16B, 16C, 16D bzw. 20A, 20B sowie dem Verbrennungsmotor 24 zugeordneten Sensoren 34 verbunden, die den Betriebszustand bzw. Betriebsmodus der Antriebe und Aktoren sowie des Verbrennungsmotors überwachen. Die Überwachung unter Verwendung einzelner Sensoren ist nur als ein Ausführungsbeispiel zur Veranschaulichung der Funktionsweise zu verstehen. Betriebszustand und Betriebsmodus können aber auch aus einer zentralen Steuerung der Straßenbaumaschine ausgelesen werden.

Die Zustandsüberwachungsvorrichtung 32 erfasst den Betriebszustand des Verbrennungsmotors 24, d. h. ob der Motor ein- oder ausgeschaltet ist, das Drehen der Räder 4, 5, 6, 7 über die Antriebe 8 der Räder, den Lenkwinkel über die Aktoren 9A, 9B, 9C, 9D der Räder, die Höhe der Fräz-/Mischwalze 18 gegenüber dem Maschinenrahmen 14 bzw. der Bodenoberfläche 15 über die Aktoren 20A, 20B der Höheneinstelleinrichtung und die Höhe und Neigung des Maschinerahmens 14 bzw. der Fräz-/Mischwalze 18 gegenüber der Bodenoberfläche15 über die Aktoren 16A, 16B, 16C, 16D der Hubeinrichtungen 10, 11, 12, 13.

Die Mensch-Maschinen-Schnittstelle 26 umfasst mehrere Bedienelemente, von denen in Fig. 2 nur ein beispielsweise als Taster oder Schalter ausgebildetes Bedienelement 35 zum Ein- und Ausschalten des Verbrennungsmotors 24, ein als Lenkrad ausgebildetes Bedienelement 36 zum Lenken der vorderen Räder 4, 5, ein als Joystick ausgebildetes Bedienelement 37 zur Einstellung der Höhe und Neigung des Maschinenrahmens 14 gegenüber der Bodenoberfläche 15 und der Höhe der Fräs/-Mischwalze 18 gegenüber dem Maschinenrahmen 14 sowie zum Lenken der hinteren Räder 6, 7 und ein beispielsweise als Taster oder Schalter ausgebildetes Bedienelement 38 zur Aktivierung eines Lernmodus dargestellt sind, welcher nachfolgend noch im Einzelnen beschrieben wird.

Darüber hinaus umfasst die Mensch-Maschinen-Schnittstelle 26 ein Display 39, auf dem Bilder, Grafiken, Animationen oder alphanumerische Zeichen 40 dargestellt werden können, beispielsweise eine Abbildung des zu bedienenden Bedienelements mit einer Animation, wie das Bedienelement bedient werden soll, um eine Befehlseingabe vorzunehmen. Anstelle einer genauen Abbildung des betreffenden Bedienelements können auf dem Display 39 auch grafische Darstellungen, beispielsweise Piktogramme dargestellt werden, um bestimmte Handlungsanweisungen zu visualisieren, welche das Bedienpersonal auffordern sollen, eine bestimmte Befehlseingabe vorzunehmen,

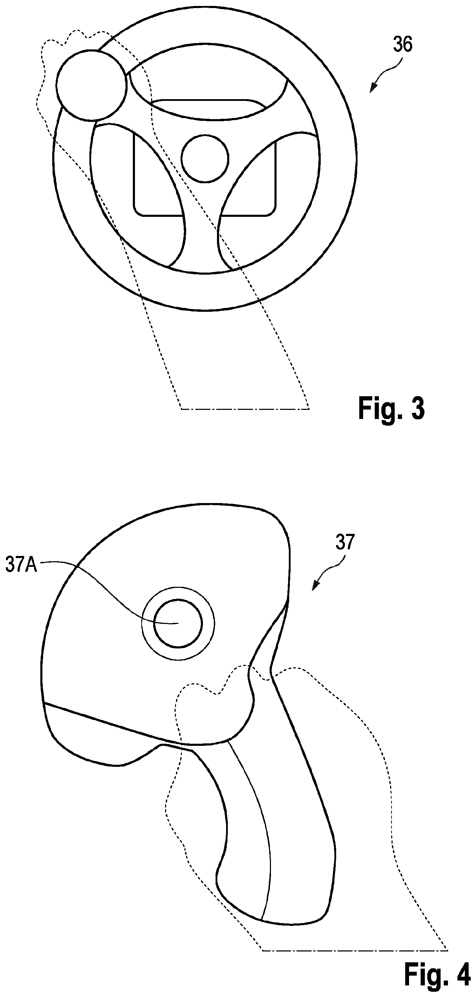

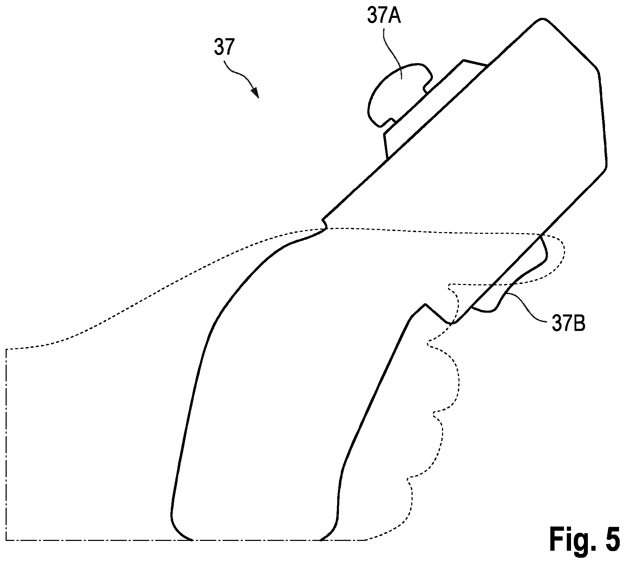

Fig. 3 zeigt das Lenkrad 36 in der Draufsicht und die Figuren 4 und 5 zeigen den Joystick 37 in der Draufsicht (Fig. 4) und in der Seitenansicht (Fig. 5). Mit dem Lenkrad 36 können die vorderen und hinteren Räder 4, 5 der Straßenfräsmaschine gelenkt werden, wobei ein erster Lenkmodus, in dem nur die vorderen Räder 4, 5 lenken (Vorderradlenkung), ein zweiter Lenkmodus, in dem die vorderen und hinteren Räder 4, 5, 6, 7 in entgegengesetzte Richtungen (Vorderrad- und Hinterradlenkung in entgegengesetzte Richtungen) und ein dritter Lenkmodus, in dem die vorderen und hinteren Räder 4, 5, 6, 7 in dieselbe Richtung (Vorderrad- und Hinterradlenkung in entgegengesetzte Richtungen "Hundeganglenkung") vorgegeben werden können. Der Joystick 37 kann nach links oder rechts verschwenkt werden, um nur die hinteren Räder 6, 7 zu lenken. Fig. 4 zeigt den Joystick 37 in der nach links geschwenkten Stellung. Folglich können in einem vierten Lenkmodus durch Drehen des Lenkrads 36 die vorderen Räder 4, 5 (im Lenkmodus "Vorderradlenkung") und durch Verschwenken des Joysticks 37 die hinteren Räder 6, 7 unabhängig voneinander gelenkt werden.

Zur Einstellung der Höhe und Neigung des Maschinenrahmens 14 gegenüber der Bodenoberfläche 15 weist der Joystick 37 an der Oberseite einen Bedienknopf 37A auf, welcher eine Neutralstellung einnehmen kann und in vier Richtungen nach oben und unten sowie nach links oder rechts gekippt werden kann (Fig. 4). Durch Kippen des Bedienknopfs 37A nach vorne werden sämtliche Hubeinrichtungen 10, 11, 12, 13 ausgefahren, so dass der Maschinenrahmen 14 angehoben wird, und durch Kippen des Bedienknopfs 37A nach hinten werden sämtliche Hubeinrichten 10, 11, 12, 13 eingefahren, so dass der Maschinenrahmen 14 abgesenkt wird. Durch Kippen des Bedienknopfs 37A nach links werden die in Arbeitsrichtung 3 linken Hubeinrichtungen 10, 12 eingefahren und/oder die rechten Hubeinrichtungen 11, 13 werden ausgefahren, so dass der Maschinenrahmen 14 auf die linke Seite kippt, und durch Kippen des Bedienknopfs 37A nach rechts werden die in Arbeitsrichtung linken Hubeinrichtungen 10, 12 ausgefahren und/oder die rechten Hubeinrichtungen 11, 13 werden eingefahren, so dass der Maschinenrahmen auf die rechte Seite kippt. In der Neutralstellung werden die Hubeinrichtungen 10, 11, 12, 13 nicht verfahren.

Zur Einstellung der Höhe der Fräs-/Mischwalze 18 gegenüber dem Maschinenrahmen 14 ist an der Unterseite des Joysticks ein Kippschalter 37B vorgesehen (Fig. 5), welcher eine Neutralstellung einnehmen kann und nach vorne oder hinten gekippt werden kann. Durch Kippen des Kippschalters 37B nach vorne wird die Fräs-/Mischwalze 18 angehoben und durch Kippen nach hinten abgesenkt. In der Neutralstellung wird die Fräs-/Mischwalze 18 nicht verfahren.

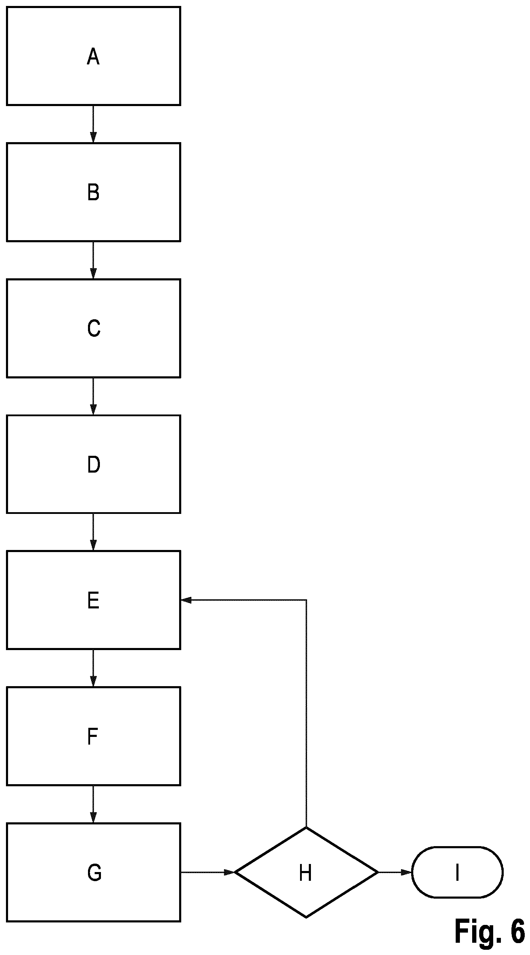

Nachfolgend wird der Lernmodus der Straßenbaumaschine im Einzelnen beschrieben. Fig. 6 zeigt einen Ablaufplan zur Veranschaulichung des Lernmodus. Die Steuereinrichtung 27 ist derart konfiguriert, dass die in Fig. 6 dargestellten Schritte durchgeführt werden.

Das Bedienpersonal kann die Straßenbaumaschine durch Betätigung des Tasters oder Schalters 38 der Mensch-Maschinen-Schnittstelle in einen Lernmodus schalten, was von der Steuereinrichtung 27 erkannt wird (Schritt A: "Lernmodus starten"). Die Steuereinrichtung 27 kann aus Sicherheitsgründen derart konfiguriert sein, dass die Aktoren 8 zum Antrieb der Räder 4, 5, 6, 7 deaktiviert sind, beispielsweise nicht mit Hydraulikflüssigkeit versorgt werden, so dass die Baumaschine nicht losfahren kann, was mit der Überwachungsvorrichtung 32 erfasst werden kann.

Der Lernmodus umfasst mehrere Lektionen. Bei dem vorliegenden Ausführungsbeispiel umfasst der Lernmodus eine erste Lektion 1.0 zum Lernen des Einstellens der Höhe der Fräs-/Mischwalze 18 gegenüber dem Maschinenrahmen 14, eine zweite Lektion 2.0 zum Lernen des Einstellens der Höhe des Maschinenrahmens 14 gegenüber der Bodenoberfläche 15, eine dritte Lektion 3.0 zum Rollen des Maschinerahmens 14 und eine vierte Lektion 4.0 zum Lenken der Räder 4, 5, 6, 7. Jede Lektion 1.0, 2.0, 3.0, 4.0 umfasst mehrere Handlungsanweisungs-Datensätze 1.0.1, 1.0.2, 1.0.3 ... , die in der Speichereinrichtung 30 gespeichert sind. Die schematische Darstellung in Fig. 2 zeigt die vier Lektionen 1.0, 2.0, 3.0, 4.0 exemplarisch, die jeweils mehrere Handlungsanweisungs-Datensätze 1.0.1, 1.0.2, 1.0.3 ... umfassen. Jeder Handlungsanweisungs-Datensatz 1.0.1, 1.0.2, 1.0.3 ... beinhaltet Daten für eine mit der Mensch-Maschinen-Schnittstelle 26 zu visualisierende Handlungsanweisung zur Vornahme einer Befehlseingabe durch das Bedienpersonal.

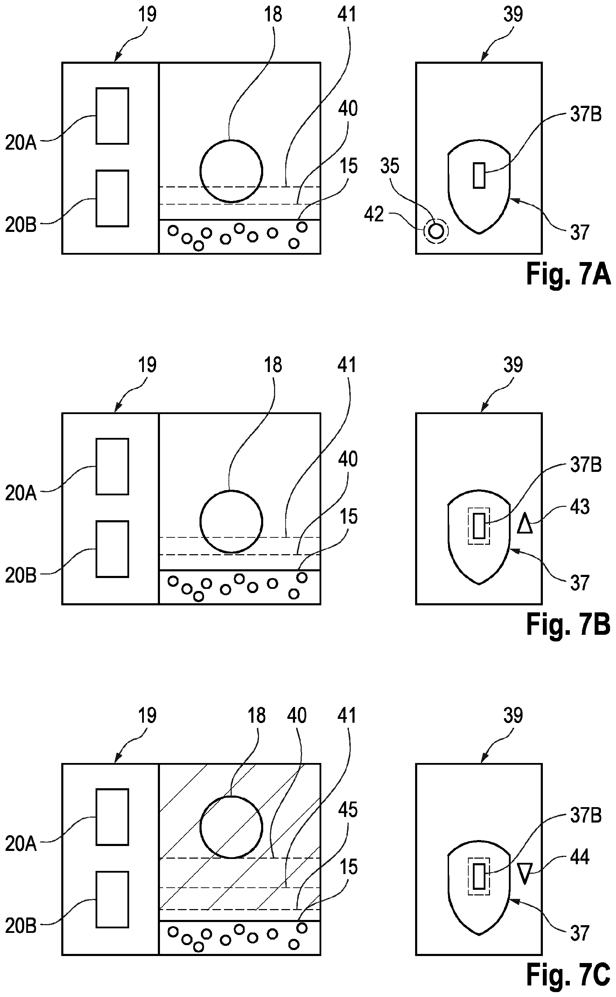

Dem Bedienpersonal werden beispielsweise durch auf dem Display 39 dargestellte grafische Symbole die oben angegebenen Lektionen 1.0, 2.0, 3.0, 4.0 angeboten, unter denen das Bedienpersonal eine Lektion auswählen kann, beispielsweise die erste Lektion 1.0 zum Lernen der Höheneinstellung der Fräs-Mischwalze 18, die nachfolgend unter Bezugnahme auf die Figuren 7A bis 7C beschrieben wird (Schritt B: "Lektion Auswählen").

Nach der Auswahl der Lektion "Höheneinstellung der Fräswalze" werden von der Steuereinrichtung 26 aus den in der Speichereinrichtung 30 gespeicherten Handlungsanweisungs-Datensätzen 1.0.1, 1.0.2, 1.0.3 ... zunächst diejenigen Datensätze ausgelesen, welche der Lektion 1.0 zugeordnet sind (Schritt C: "Auslesen der Datensätze aus Speichereinrichtung") und von der Steuereinrichtung werden die für die Lektion relevanten Betriebszustände bzw. Betriebsmodi, die den Datensätzen zuzuordnen sind, ermittelt (Schritt D: "Ermittlung relevanter Betriebszustände bzw. Betriebsmodi).

Daraufhin ermittelt die Steuereinrichtung 27 für die relevanten Betriebszustände bzw. Betriebsmodi die aktuellen Betriebszustände (Schritt E: "Ermittlung der aktuellen Betriebszustände bzw. Betriebsmodi"), indem die Daten (Signale) der den betreffenden Antrieben 8 oder Aktoren 9A, 9B, 9C, 9D bzw. 16A, 16B, 16C, 16D bzw. 20A, 20B zugeordneten Sensoren 34 ausgewertet werden.

In Abhängigkeit von den aktuellen Betriebszuständen bzw. Betriebsmodi werden die einzelnen Handlungsanweisungs-Datensätze 1.0.1, 1.0.2, 1.0.3 ... von der Steuereinrichtung 27 abgearbeitet, um die Handlungsanweisungen auf dem Display 39 zu visualisieren. Die Steuereinrichtung wählt in Abhängigkeit von dem aktuellen Betriebszustand bzw. Betriebsmodus einen bestimmten Handlungsanweisungs-Datensatz (Aufforderung zur Vornahme einer bestimmten Befehlseingabe) aus (Schritt F. "Auswahl eines bestimmten Datensatzes"). Dieser Datensatz wird dann auf dem Display 39 visualisiert (Schritt G: Visualisierung des Datensatzes").

Daraufhin wird überprüft, ob sämtliche Datensätze abgearbeitet sind (Schritt: H "Datensatz abgearbeitet?"). Wenn dies nicht der Fall ist, wird wieder der aktuelle Betriebszustand bzw. Betriebsmodus (Schritt E: "Ermittlung der aktuellen Betriebszustände bzw. Betriebsmodi") ermittelt, in Abhängigkeit von dem aktuellen Betriebszustand bzw. Betriebsmodus ein bestimmter Handlungsanweisungs-Datensatz ausgewählt (Schritt F. "Auswahl eines bestimmten Datensatzes") und dieser Datensatz dann auf dem Display 39 visualisiert (Schritt G: Visualisierung des Datensatzes").

Die Auswahl eines bestimmten Datensatzes und dessen Visualisierung erfolgt so lange bis sämtliche Datensätze abgearbeitet sind (Schritt: H "Datensatz abgearbeitet?"). Wenn sämtliche Datensätze abgearbeitet sind, ist die Lektion beendet (Schritt I: "Ende").

Die oben allgemein beschriebene Funktionsweise wird anhand des folgenden Ausführungsbeispiels unter Bezugnahme auf die Figuren 7A bis 7C erläutert, in denen die einzelnen Teile mit denselben Bezugszeichen wie in den vorausgehenden Figuren bezeichnet sind.

Fig. 7A zeigt die mittels der Aktoren 20A, 20B der Höheneinstelleinrichtung 19, welche bei dem vorliegenden Ausführungsbeispiel die Kolben-Zylinder-Anordnungen 21 sind, gegenüber dem Maschinenrahmen 14 höhenverstellbare Fräs-/Mischwalze 18 auf der linken Seite und das Display 39 der Mensch-Maschinen-Schnittstelle 26 mit einer grafischen Darstellung auf der rechten Seite.

Die für die Lektion relevanten Betriebszustände sind hier der Betriebszustand des Verbrennungsmotors 24 und der Betriebszustand der Höheneinstelleinrichtung 19 der Fräs-/Mischwalze 18. Die aktuellen Betriebszustände werden von der Zustandsüberwachungseinrichtung 32 erfasst. Die Zustandsüberwachungseinrichtung 32 stellt fest, dass der Verbrennungsmotor 24 nicht eingeschaltet ist und dass die Höhe der Unterkante 40 der Fräs-/Mischwalze 18 in Bezug auf die Bodenoberfläche 15 kleiner als ein vorgegebener Grenzwert 41 ist. Die Höhe der Unterkante 40 der Fräs-/Mischwalze 18 und der Grenzwert 41 sind in den Figuren 7A bis 7C durch gestrichelte Linien gekennzeichnet.

Die Steuereinrichtung 27 überprüft zunächst, ob der Verbrennungsmotor 24 eingeschaltet ist. Da der Verbrennungsmotor 24 nicht eingeschaltet ist, wählt die Steuereinrichtung 27 aus den Handlungsanweisungs-Datensätzen 1.0.1, 1.0.2, 1.0.3 ... einen Handlungsanweisungs-Datensatz 1.0.1 aus und visualisiert auf dem Display 39 die dem ausgewählten Handlungsanweisungs-Datensatz entsprechende Handlungsanweisung, welche das Bedienpersonal auffordert, den Schalter oder Taster 35 zum Einschalten des Verbrennungsmotors zu betätigen. Dies erfolgt durch die Darstellung des in Fig. 7A gezeigten Piktogramms, das den Schalter oder Taster 35 zum Ein- und Ausschalten des Verbrennungsmotors 23 neben dem Joystick 37 zeigt. Form und Anordnung des Tasters oder Schalters und des Joysticks entsprechen in der grafischen Darstellung auf dem Display 39 dessen Form und Anordnung auf der Mensch-Maschinen-Schnittstelle 26 (Bedienpult), so dass der Maschinenführer erkennen kann, welcher Schalter betätigt werden soll. Fig. 7A zeigt eine derartige Animation nur beispielhaft. Anstelle einer vereinfachten grafischen Darstellung können die Bedienelemente auf dem Display auch wirklichkeitsgetreu dargestellt werden. Das Bedienpersonal kann beispielsweise durch Blinken des Schalters oder Tasters 35 zu dessen Betätigung animiert werden, was in Fig. 7A durch einen Kreis 42 in gestrichelter Linie veranschaulicht wird. Wenn hingegen der Motor bereits eingeschaltet ist, wird dieser Handlungsanweisungs-Datensatz nicht ausgewählt und dargestellt.

Wenn die Zustandsüberwachungseinrichtung 32 feststellt, dass der Verbrennungsmotor 24 eingeschaltet ist und die Höhe der Unterkante 40 der Fräs-/Mischwalze 18 in Bezug auf die Bodenoberfläche 15 kleiner als ein vorgegebener Grenzwert 41 ist, wird auf dem Display 39 das in Fig. 7B gezeigte Piktogramm dargestellt, das durch den nach oben zeigenden Pfeil 43 neben dem blinkenden Kippschalter 37B an der Unterseite des Joysticks 37 zum Kippen desselben nach oben auffordert, um die Fräs-/Mischwalze 18 anzuheben. Da die Fräs-/Mischwalze angehoben wird, kann die Walze nicht mit dem Boden kollidieren. Die Darstellung des Piktogramms ist auch hier wieder wie in sämtlichen folgenden Figuren nur als eine Möglichkeit zu verstehen, dem Bedienpersonal das zu betätigenden Bedienelement anzuzeigen und zu zeigen, wie das Bedienelement zu bedienen ist.

Fig. 7C zeigt den Fall, dass die Zustandsüberwachungseinrichtung 23 feststellt, dass der Verbrennungsmotor 24 eingeschaltet ist und die Höhe der Fräs-/Mischwalze in Bezug auf die Bodenoberfläche größer als der vorgegebene Grenzwert 41 ist. Das Bedienpersonal wird durch den nach unten zeigenden Pfeil 44 zum Kippen des Kippschalters 37B nach unten aufgefordert, so dass die Fräs-/Mischwalze 18 abgesenkt wird.

Beim Absenken der Fräs-/Mischwalze 18 besteht die Gefahr, dass diese unbeabsichtigt in den Boden eindringt. Daher kann die Steuereinrichtung 27 die Definition eines bestimmten Betriebsbereichs für die Höhe der Fräs-/Mischwalze 18 durch einen unteren minimalen Grenzwert 45 für einen einzuhaltenden Mindestabstand 45 der Unterkante 40 der Fräs-/Mischwalze 18 zu der Bodenoberfläche 15 vorsehen. Die Steuereinrichtung 27 erzeugt in diesem Fall die Steuerbefehlssignale für die der Fräs-/Mischwalze 18 zugeordneten Aktoren 20A, 20B nur dann, wenn die Fräs-/Mischwalze in dem definierten Betriebsbereich, d. h. in dem in Fig. 7C durch eine Schraffur gekennzeichneten Bereich oberhalb des unteren minimalen Grenzwertes 45 höhenverstellt wird, so dass der Mindestabstand zu der Bodenoberfläche 15 eingehalten wird. Die Fräs-/Mischwalze 18 wird beim Absenken also die Bewegung nach unten automatisch stoppen, wenn der untere Grenzwert 45 erreicht wird. Das Bedienpersonal kann also die Höheneinstellung der Fräs-/Mischwalze 18 gefahrlos üben.

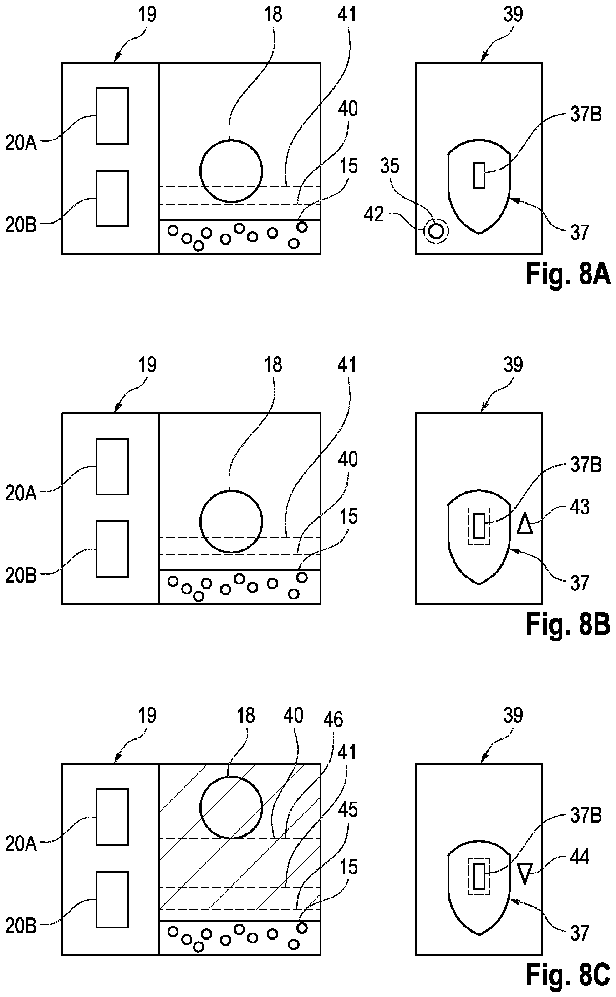

Die Figuren 8A bis 8C zeigen eine weiteres Ausführungsbeispiel, bei dem die Steuereinrichtung 27 derart konfiguriert ist, dass das Bedienpersonal zur Vornahme von mehreren Befehlseingaben nacheinander aufgefordert wird. In einem ersten Schritt wird das Bedienpersonal zum Einschalten des Verbrennungsmotors 24 aufgefordert (Fig. 8A), da der Motor nicht eingeschaltet ist. Nach dem Einschalten des Motors wird das Bedienpersonal in einem zweiten Schritt durch den nach oben zeigenden Pfeil 43 zum Anheben der Fräs-/Mischwalze 18 aufgefordert, da die Höhe der Unterkante 40 der Fräs-/Mischwalze 18 kleiner als ein vorgegebener erster (unterer) Grenzwert 41 ist (Fig. 8B).

Wenn die Höhe der Unterkante 40 der Fräs-/Mischwalze 18 gleich einem vorgegebenen zweiten (oberer) Grenzwert 46 ist, wird das Bedienpersonal dann in einem dritten Schritt durch den nach unten zeigenden Pfeil 44 zum Absenken der Fräs-/Mischwalze 18 aufgefordert (Fig. 8C). Die Fräs-/Mischwalze 18 stoppt ihre Bewegung automatisch, wenn deren Unterkante 40 den unteren minimalen Grenzwert 45 erreicht. Nach dem Erreichen des unteren Grenzwertes kann das Bedienpersonal wieder zum Anheben der Fräs-/Mischwalze 18 aufgefordert werden. Nach dem erneuten Anheben der Fräs-/Mischwalze 18 kann das Bedienpersonal wieder zum Absenken der Fräs-/Mischwalze 18 aufgefordert werden. Diese Übungen können solange wiederholt werden, bis das Bedienpersonal den Lernmodus beendet. Der Lernmodus kann aber auch nach einer bestimmten Anzahl von Übungen beendet werden. Es ist ersichtlich, dass die Steuereinrichtung 27 eine bestimmte Reihenfolge der Befehlseingaben, d. h. erst Anheben und dann Absenken der Fräs-/Mischwalze, festlegt, welche von der Ausgangsposition der Fräs-/Mischwalze, d. h. von der Höhe deren Unterkante 40, abhängig ist.

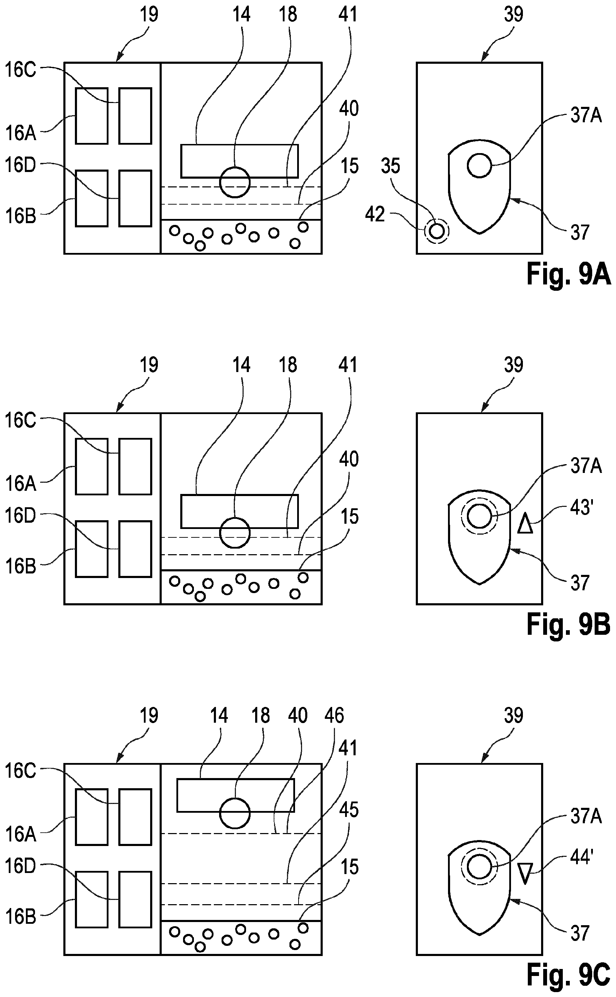

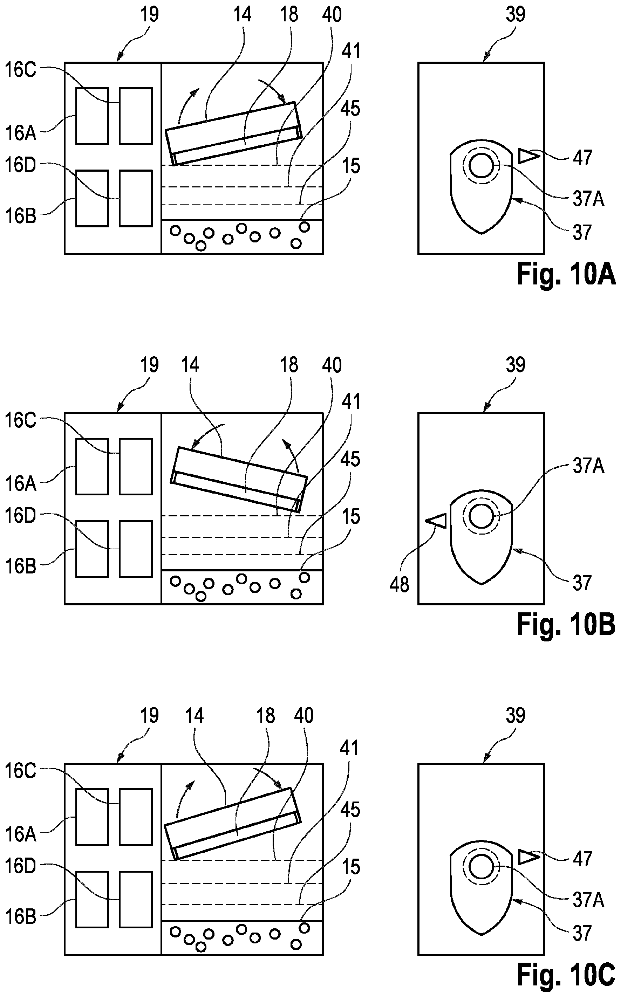

Nachfolgend wird unter Bezugnahme auf die Figuren 9A bis 9C eine Lektion des Lernmodus zur Einstellung der Höhe des Maschinenrahmens gegenüber der Bodenoberfläche und unter Bezugnahme auf die Figuren 10A bis 10C eine Lektion des Lernmodus zur Einstellung der Querneigung des Maschinenrahmens durch Betätigung der den vorderen und hinteren, linken und rechten Hubeinrichtungen 10, 11, 12, 13 zugeordneten Aktoren 16A, 16B, 16C, 16D beschrieben. In den Figuren ist der Maschinenrahmen 14 mit der Fräs-/Mischwalze 18 nur schematisch dargestellt.

In einem ersten Schritt (Fig. 9A) wird das Bedienpersonal (wie in Fig. 7A und 8A) zum Einschalten des Verbrennungsmotors 24 aufgefordert, da der Motor nicht eingeschaltet ist. Nach dem Einschalten des Motors 24 durch Betätigung des blinkenden Schalters oder Tasters 35 wird das Bedienpersonal in einem zweiten Schritt durch Blinken des Bedienknopfes 37A an der Oberseite des Joysticks 37 zum Anheben des Maschinenrahmens 14 und somit der an dem Maschinenrahmen angeordneten Fräs-/Mischwalze 18 aufgefordert, da die Höhe der Unterkante 40 der Fräs-/Mischwalze 18 kleiner als ein vorgegebener erster (unterer) Grenzwert 41 ist (Fig. 9B). Der nach oben zeigende Pfeil 43' zeigt, dass der Bedienknopf 37A nach vorne zu kippen ist. Wenn die Höhe der Unterkante 40 der Fräs-/Mischwalze 18 einen vorgegebene zweiten (oberen) Grenzwert 46 erreicht hat, wird das Bedienpersonal in einem dritten Schritt durch den nach unten zeigenden Pfeil 44' zum Absenken des Maschinenrahmens 14 aufgefordert (9C). Der Maschinenrahmen 14 stoppt seine Bewegung automatisch, wenn die Unterkante 40 der Fräs-/Mischwalze 18 einen unteren minimalen Grenzwert erreicht hat. Nach dem Erreichen des unteren Grenzwertes kann das Bedienpersonal wieder zum Anheben des Maschinenrahmens aufgefordert werden. Nach dem erneuten Anheben des Maschinenrahmens kann das Bedienpersonal wieder zum Absenken des Maschinenrahmens aufgefordert werden. Diese Übungen können solange wiederholt werden, bis das Bedienpersonal den Lernmodus beendet. Der Lernmodus kann aber auch nach einer bestimmten Anzahl von Übungen beendet werden.

Die Zustandsüberwachungseinrichtung 32 ist derart konfiguriert, dass die Neigung des Maschinenrahmens 14 in Bezug auf die Bodenoberfläche 15 erfasst wird. Wenn die Zustandsüberwachungseinrichtung 32 eine Neigung des Maschinenrahmens 14 auf die linke Seite feststellt (Fig. 10A), wird das Bedienpersonal in einem ersten Schritt durch einen nach rechts zeigenden Pfeil 47 zum Kippen des an der Oberseite des Joysticks 37 angeordneten Bedienknopfs 37A nach rechts aufgefordert, so dass der Maschinerahmen 14 auf die rechte Seite rollt. Daraufhin wird das Bedienpersonal in einem zweiten Schritt durch einen nach links zeigenden Pfeil 48 zum Kippen des an der Oberseite des Joysticks angeordneten Bedienknopfs 37A nach links aufgefordert, so dass der Maschinerahmen 14 auf die linke Seite rollt (Fig. 10B). In einem dritten Schritt kann das Bedienpersonal wieder zum Rollen des Maschinerahmens auf die rechte Seite aufgefordert werden (Fig. 10C).

Die Steuereinrichtung sieht vor, dass Steuerbefehlssignale zur Betätigung der den Hubeinrichtungen zugeordneten Aktoren 16A, 16B, 16C, 16D aber nur dann erzeugt werden, wenn die Unterkante 40 der Fräs-/Mischwalze oberhalb des unteren minimalen Grenzwertes liegt, d. h. sich die Fräs-/Mischwalze in dem definierten Betriebsbereich befindet, was in dem Ausführungsbeispiel von den Figuren 10A bis 10C (allerdings stark überzeichnet) der Fall ist. Das Bedienpersonal kann also auch die Einstellung der Höhe und Neigung des Maschinenrahmens gefahrlos üben.

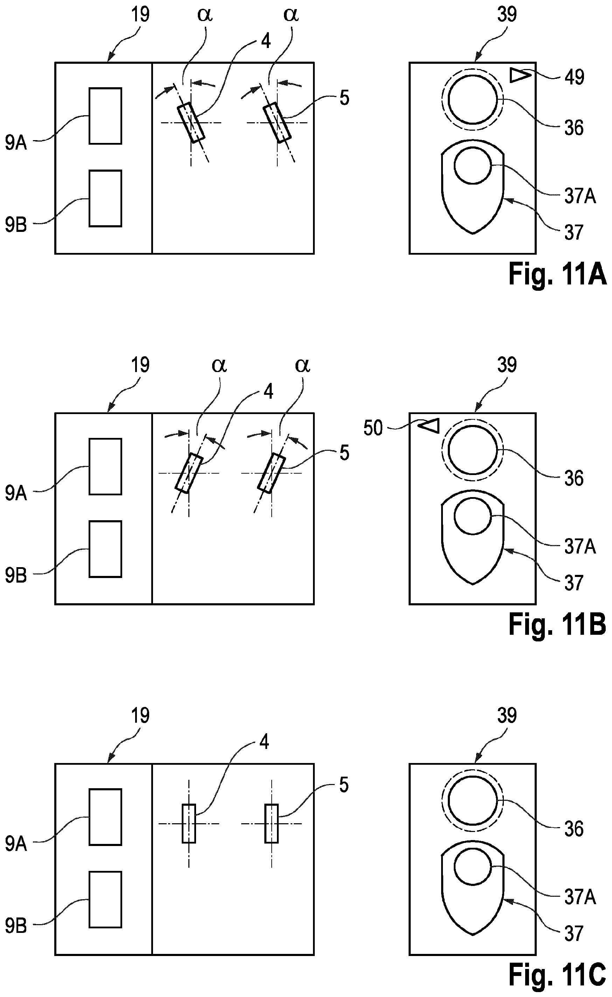

Nachfolgend wird unter Bezugnahme auf Fig. 11A und Fig. 11B eine Lektion des Lernmodus zur Lenkung der vorderen Räder 4, 5 beschrieben. Die vorderen Räder 4, 5 sind in den Fig. 11A und Fig. 11B nur schematisch dargestellt. Der Lenkwinkel ist mit α bezeichnet.

Die Steuereinrichtung 27 sieht vor, dass Steuerbefehlssignale zur Betätigung der den vorderen Rädern 4, 5 zugeordneten Aktoren 9A, 9B erzeugt werden Die Zustandsüberwachungseinrichtung 32 ist derart konfiguriert, dass der Lenkwinkel α erfasst wird. Wenn die Zustandsüberwachungseinrichtung 32 feststellt, dass die Räder 4, 5 nach links gelenkt sind, wird das Bedienpersonal durch Blinken eines das Lenkrad 36 darstellenden Symbols aufgefordert, das Lenkrad zu drehen, was in den Figuren 11A bis 11C wieder durch einen Kreis veranschaulicht wird. Die Richtung, in der das Lenkrad 36 gedreht werden soll, kann durch einen Pfeil 49 nach rechts signalisiert werden (Fig. 11A). Wenn die Räder hingegen nach rechts gelenkt sind, wird das Bedienpersonal aufgefordert, das Lenkrad 36 nach links zu drehen (Fig. 11B), was durch einen Pfeil 50 nach links signalisiert wird. Die Aufforderung zum Drehen des Lenkrades 36 ist also von der Ausgangsstellung der Räder 4, 5 abhängig. Beim Drehen des Lenkrades 36 kann das Bedienpersonal mit einem Blick auf die Räder erkennen, wie die vorderen Räder lenken. Die Stellung der Räder kann auch auf dem Display 39 visualisiert werden.

Fig. 11C zeigt ein Ausführungsbeispiel, bei dem die Steuereinrichtung einen Handlungsanweisungs-Datensatz auswählt, um ein entsprechendes Piktogramm auf dem Display 39 der Mensch-Maschinen-Schnittstelle 26 darzustellen, welches das Bedienpersonal auffordert, die vorderen Räder 4, 5 durch Drehen des Lenkrades 36 geradeauszustellen, wenn die Zustandsüberwachungseinrichtung 32 feststellt, dass die vorderen Räder 4, 5 nach links oder rechts gelenkt sind. Das Geradeausstellen der Räder kann aber auch durch Betätigung eines separaten Tasters ausgelöst werden, woraufhin sich die Räder automatisch geradestellen.

Eine weitere Ausführungsform sieht vor, dass die Zustandsüberwachungsvorrichtung 32 sowohl den Lenkwinkel α der in Arbeitsrichtung 3 vorderen Räder 4, 5 als auch der hinteren Räder 6, 7 überwacht, denen die Aktoren 9A, 9B, 9C, 9D zur Betätigung derselben zugeordnet sind. Die Steuereinrichtung 27 sieht bei dieser Ausführungsform die Einstellung unterschiedlicher Betriebsmodi vor, bei denen es sich um unterschiedliche Lenkmodi handelt. Die Zustandsüberwachungseinrichtung 32 ist derart konfiguriert, dass auch der eingestellte Lenkmodus erfasst wird.

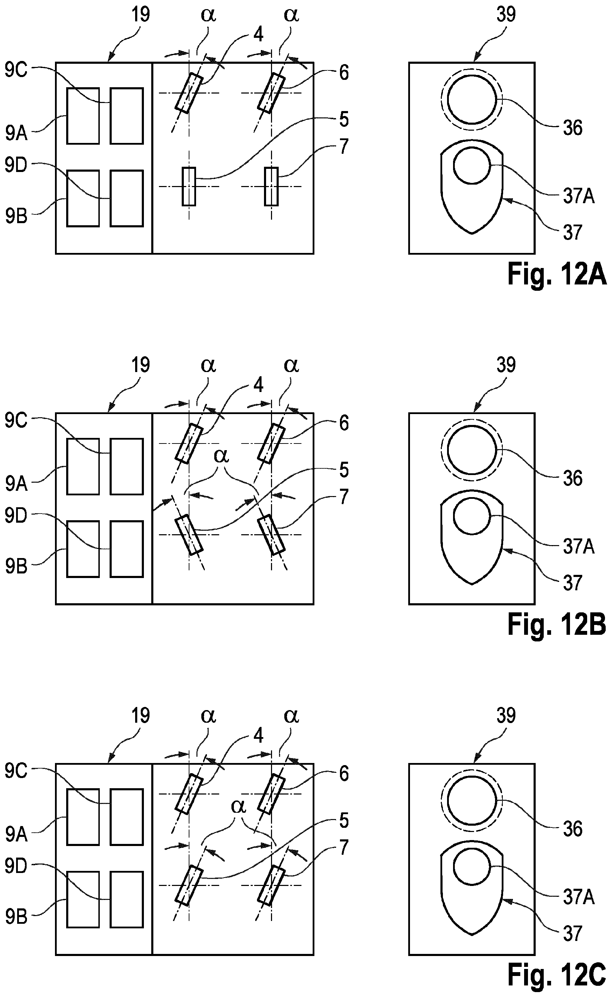

Fig. 12A zeigt den Fall, dass der Lenkmodus "Vorderradlenkung" eingestellt ist. Wenn die Zustandsüberwachungseinrichtung 32 den Lenkmodus "Vorderradlenkung" feststellt, wählt die Steuereinrichtung 27 einen Handlungsanweisungs-Datensatz aus, um ein entsprechendes Piktogramm auf dem Display der Mensch-Maschinen-Schnittstelle darzustellen, welches das Bedienpersonal beispielsweise durch Blinken des Lenkrads 36 auf dem Display 39 auffordert, die vorderen Räder 4, 5 zu lenken. Dies kann eine Aufforderung zum Lenken nach links und/oder rechts und/oder geradeaus sein, wie in den Figuren 11A, 11B oder 11C veranschaulicht ist. Die Steuereinrichtung 27 kann die betreffenden Datensätze hierzu in einer vorgegebenen Reihenfolge auswählen. Dem Bedienpersonal wird somit angezeigt, dass die vorderen Räder 4, 5 mit dem Lenkrad 36 und nicht mit dem Joystick 37 gelenkt werden. Beim Drehen des Lenkrades 36 kann das Bedienpersonal dann mit einem Blick auf die Räder 4, 5, 6, 7 und/oder auf das Display 39 erkennen, dass nur die vorderen Räder 4, 5 lenken.

Fig. 12B zeigt den Fall, dass der Lenkmodus "Allradlenkung" eingestellt ist, bei dem sowohl die vorderen als auch hinteren Räder 4, 5, 6, 7 in entgegengesetzte Richtungen gelenkt werden. Wenn die Zustandsüberwachungseinrichtung 32 den eingestellten Lenkmodus "Allradlenkung" feststellt, wählt die Steuereinrichtung 27 einen Handlungsanweisungs-Datensatz aus, um ein entsprechendes Piktogramm auf dem Display 39 der Mensch-Maschinen-Schnittstelle 26 darzustellen, welches das Bedienpersonal beispielsweise durch Blinken des Lenkrads 36 auf dem Display 39 auffordert, das Lenkrad 36 in die eine oder andere Richtung zu drehen. Dem Bedienpersonal wird somit angezeigt, dass mit dem Lenkrad 36 sämtliche Räder 4, 5, 6, 7 in entgegengesetzte Richtungen gelenkt werden können. Beim Drehen des Lenkrades 36 kann das Bedienpersonal mit einem Blick auf die Räder und/oder auf das Display 39 erkennen, dass sich die vorderen und hinteren Räder 4, 5, 6, 7 in entgegengesetzte Richtungen bewegen.

Fig. 12C zeigt den Fall, dass der Lenkmodus "Hundeganglenkung" eingestellt ist, bei dem die vorderen und hinteren Räder 4, 5, 6, 7 in dieselbe Richtung gelenkt werden. Wenn die Zustandsüberwachungseinrichtung 32 den eingestellten Lenkmodus "Hundeganglenkung" feststellt, wählt die Steuereinrichtung 27 einen Handlungsanweisungs-Datensatz aus, um ein entsprechendes Piktogramm auf dem Display 39 der Mensch-Maschinen-Schnittstelle 26 darzustellen, welches das Bedienpersonal beispielsweise durch Blinken eines das Lenkrad 36 darstellenden Symbols auffordert, das Lenkrad zu drehen. Dem Bedienpersonal wird somit angezeigt, dass mit dem Lenkrad sämtliche Räder in dieselbe Richtung gelenkt werden. Beim Drehen des Lenkrades 36 kann das Bedienpersonal mit einem Blick auf die Räder und/oder auf das Display 39 sofort erkennen, dass sich die vorderen und hinteren Räder in dieselbe Richtung bewegen.

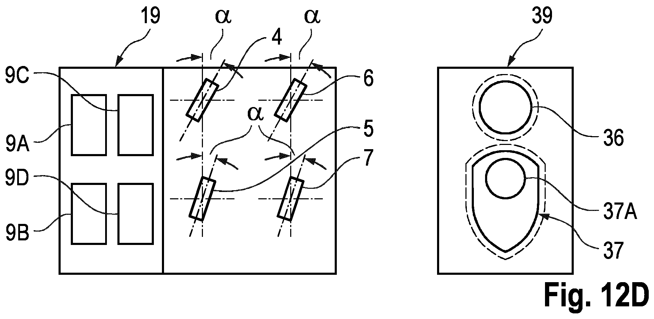

Fig. 12D zeigt den Fall, dass ein Lenkmodus vorgegeben ist, bei dem die vorderen und hinteren Räder 4, 5, 6, 7 unabhängig voneinander bewegt werden können. Wenn die Zustandsüberwachungseinrichtung 32 diesen Lenkmodus erkennt, wählt die Steuereinrichtung 27 einen Handlungsanweisungs-Datensatz aus, um ein entsprechendes Piktogramm auf dem Display 39 der Mensch-Maschinen-Schnittstelle 26 darzustellen, welches das Bedienpersonal beispielsweise durch Blinken durch Blinken eines das Lenkrad 36 und den Joystick 37 darzustellenden Symbols auffordert, was in Fig. 12D wieder durch einen Kreis veranschaulicht ist, das Lenkrad 36 zu drehen und den Joystick 37 nach links oder rechts zu schwenken. Hierzu kann das Bedienpersonal auch durch eine Animation aufgefordert werden, welche zum Drehen des Lenkrades und Schwenken des Joysticks in die eine oder andere Richtung animiert. Mit einem Blick auf die Räder 4, 5, 6, 7 und/oder das Display 39 kann das Bedienpersonal beim Drehen des Lenkrades 36 die entsprechende Bewegung der vorderen Räder 4, 5 und beim Schwenken des Joysticks 37 die entsprechende Bewegung der hinteren Räder sofort erkennen.

## Patentansprüche

1. Selbstfahrende Straßenbaumaschine mit
einem von antreibbaren, lenkbaren Rädern oder Kettenlaufwerken (4, 5, 6, 7) getragenen Maschinenrahmen (14) und einer an dem Maschinenrahmen angeordneten und in Bezug auf die Oberfläche des zu bearbeitenden Bodens in der Höhe verstellbaren Fräs-/Mischwalze (18) zur Bearbeitung des Bodens,
den Rädern oder Kettenlaufwerken (4, 5, 6, 7) und der Fräs-/Mischwalze zugeordneten Antrieben und/oder Aktoren (8, 9A, 9B, 9C, 9D, 16A, 16B, 16C, 16D, 20A, 20B) zum Antreiben und Lenken der Räder oder Kettenlaufwerke und Einstellen der Höhe der Fräs-/Mischwalze (18) in Bezug auf die Oberfläche des zu bearbeitenden Bodens,
einer Steuereinrichtung (27), die derart konfiguriert ist, dass Steuerbefehlssignale für die Antriebe und/oder Aktoren (8, 9A, 9B, 9C, 9D, 16A, 16B, 16C, 16D, 20A, 20B) erzeugt werden, um die Räder oder Kettenlaufwerke (4, 5, 6, 7) anzutreiben und zu lenken und die Höhe der Fräs-/Mischwalze (18) einzustellen,
einer mit der Steuereinrichtung (27) zusammenwirkenden Mensch-Maschinen-Schnittstelle (26),
einer mit der Steuereinrichtung (27) zusammenwirkenden Speichereinrichtung (30), und
einer mit der Steuereinrichtung (27) zusammenwirkenden Zustandsüberwachungseinrichtung (32), die derart konfiguriert ist, dass ein Betriebszustand und/oder ein Betriebsmodus der Antriebe und/oder Aktoren (8, 9A, 9B, 9C, 9D, 16A, 16B, 16C, 16D, 20A, 20B) erfasst wird,
**dadurch gekennzeichnet, dass**
in der Speichereinrichtung (30) eine Mehrzahl von Handlungsanweisungs-Datensätzen (1.0.1, 1.0.2, 1.0.3, 1.0.4, 1.0.5) gespeichert sind, welche jeweils Daten für eine mit der Mensch-Maschinen-Schnittstelle (26) zu visualisierende Handlungsanweisung zur Vornahme einer Befehlseingabe durch einen Menschen mit der Mensch-Maschinen-Schnittstelle zur Einstellung der Stellung der Räder oder Kettenlaufwerke (4, 5, 6, 7) und/oder der Höhe der Fräs-/Mischwalze (18) in Bezug auf die Oberfläche (15) des zu bearbeitenden Bodens beinhalten,
die Steuereinrichtung (26) einen Lernmodus mit einer Mehrzahl von Lektionen (1.0, 2.0, 3.0, 4.0) für die Einstellung der Stellung der Räder oder Kettenlaufwerke (4, 5, 6, 7) und/oder der Höhe der Fräs-/Mischwalze (18) durch den Menschen vorsieht, wobei die Steuereinrichtung für zumindest eine Lektion des Lernmodus derart konfiguriert ist,
dass in Abhängigkeit von einem von der Zustandsüberwachungseinrichtung (32) erfassten Betriebszustand und/oder Betriebsmodus der Antriebe und/oder Aktoren (8, 9A, 9B, 9C, 9D, 16A, 16B, 16C, 16D, 20A, 20B) eine Auswahl eines bestimmten Handlungsanweisungs-Datensatzes aus den Handlungsanweisungs-Datensätzen (1.0.1, 1.0.2, 1.0.3, 1.0.4, 1.0.5) getroffen wird, und die dem ausgewählten Handlungsanweisungs-Datensatz entsprechende Handlungsanweisung mit der Mensch-Maschinen-Schnittstelle (26) visualisiert wird und
dass in Abhängigkeit von der mit der Mensch-Maschinen-Schnittstelle (26) nach der Visualisierung der Handlungsanweisung von einem Menschen vorgenommenen Befehlseingabe die der Befehlseingabe entsprechenden Steuerbefehlssignale für die Antriebe und/oder Aktoren (8, 9A, 9B, 9C, 9D, 16A, 16B, 16C, 16D, 20A, 20B) zum Antreiben und Lenken der Räder oder Kettenlaufwerke (4, 5, 6, 7) und/oder zum Einstellen der Höhe der Fräs-/Mischwalze (18) erzeugt werden.

2. Selbstfahrende Straßenbaumaschine nach Anspruch 1, **dadurch gekennzeichnet, dass** eine Lektion des Lernmodus die Einstellung der Höhe der Fräs-/Mischwalze (18) in Bezug auf die Oberfläche des zu bearbeitenden Bodens ist, wobei die Steuereinrichtung (27) für diese Lektion des Lernmodus derart konfiguriert ist,
dass, wenn die von der Zustandsüberwachungseinrichtung (32) erfasste Höhe der Fräs-/Mischwalze in Bezug auf die Bodenoberfläche kleiner als ein Grenzwert für die Höhe ist, aus den in der Speichereinrichtung (30) gespeicherten Handlungsanweisungs-Datensätzen ein Handlungsanweisungs-Datensatz ausgewählt und mit der Mensch-Maschinen-Schnittstelle (26) die dem ausgewählten Handlungsanweisungs-Datensatz entsprechende Handlungsanweisung visualisiert wird, welche einen Menschen zur Vornahme einer Befehlseingabe zum Anheben der Fräs-/Mischwalze (18) auffordert, so dass nach der Befehlseingabe zumindest ein der Fräs-/Mischwalze zugeordneter Aktor derart betätigt wird, dass die Fräs-/Mischwalze angehoben wird, oder
dass, wenn die von der Zustandsüberwachungseinrichtung (32) erfasste Höhe der Fräs-/Mischwalze in Bezug auf die Bodenoberfläche größer als ein Grenzwert für die Höhe ist, aus den Handlungsanweisungs-Datensätzen ein Handlungsanweisungs-Datensatz ausgewählt und mit der Mensch-Maschinen-Schnittstelle (26) die dem ausgewählten Handlungsanweisungs-Datensatz entsprechende Handlungsanweisung visualisiert wird, welche einen Menschen zur Vornahme einer Befehlseingabe zum Absenken der Fräs-/Mischwalze (18) auffordert, so dass nach der Befehlseingabe zumindest ein der Fräs-/Mischwalze zugeordneter Aktor derart betätigt wird, dass die Fräs-/Mischwalze abgesenkt wird.

3. Selbstfahrende Straßenbaumaschine nach Anspruch 2, **dadurch gekennzeichnet, dass** die Steuereinrichtung (27) für diese Lektion des Lernmodus derart konfiguriert ist, dass
ein bestimmter Betriebsbereich für die Höhe der Fräs-/Mischwalze (18) durch einen Grenzwert für einen einzuhaltenden Mindestabstand von einem Bezugspunkt der Fräs-/Mischwalze (18) zu der Oberfläche des zu bearbeitenden Bodens definiert wird und in Abhängigkeit von einer von einem Menschen nach der Visualisierung der Handlungsanweisung vorgenommenen Befehlseingabe zum Absenken der Fräs-/Mischwalze die der Befehlseingabe entsprechenden Steuerbefehlssignale für den zumindest einen der Fräs-/Mischwalze zugeordneten Aktor nur dann erzeugt werden, wenn die Fräs-/Mischwalze in dem definierten Betriebsbereich höhenverstellt wird, so dass der Mindestabstand zu der Bodenoberfläche eingehalten wird.

4. Selbstfahrende Straßenbaumaschine nach Anspruch 2, **dadurch gekennzeichnet, dass** die Steuereinrichtung (27) für diese Lektion des Lernmodus derart konfiguriert ist, dass wenn die von der Zustandsüberwachungseinrichtung (32) erfasste Höhe der Fräs-/Mischwalze in Bezug auf die Bodenoberfläche kleiner als ein Grenzwert für die Höhe ist,
für eine vorausgehende Handlungsanweisung dieser Lektion des Lernmodus aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle (26) visualisiert wird, welche einen Menschen zur Vornahme einer Befehlseingabe zum Anheben der Fräs-/Mischwalze (18) auffordert, so dass nach der Befehlseingabe zumindest ein der Fräs-/Mischwalze zugeordneter Aktor derart betätigt wird, dass die Fräs-/Mischwalze angehoben wird, und
die Steuereinrichtung (27) derart konfiguriert ist, dass für eine der vorausgehenden Handlungsanweisung nachfolgende Handlungsanweisung aus den Handlungsanweisungs-Datensätzen ein Datensatz ausgewählt und die dem ausgewählten Handlungsanweisungs-Datensatz entsprechende Handlungsanweisung mit der Mensch-Maschinen-Schnittstelle (26) visualisiert wird, welche einen Menschen zur Vornahme einer Befehlseingabe zum Absenken der Fräs-/Mischwalze (18) auffordert, so dass nach der Befehlseingabe zumindest ein der Fräs-/Mischwalze zugeordneter Aktor derart betätigt wird, dass die Fräs-/Mischwalze abgesenkt wird, wobei ein bestimmter Betriebsbereich für die Höhe der Fräs-/Mischwalze (18) durch einen Grenzwert für einen einzuhaltenden Mindestabstand von einem Bezugspunkt der Fräs-/Mischwalze zu der Oberfläche des zu bearbeitenden Bodens definiert wird und in Abhängigkeit von einer von einem Menschen nach der Visualisierung der Handlungsanweisung vorgenommenen Befehlseingabe zum Absenken der Fräs-/Mischwalze die der Befehlseingabe entsprechenden Steuerbefehlssignale für den zumindest einen der Fräs-/Mischwalze zugeordneten Aktor nur dann erzeugt werden, wenn die Fräs-/Mischwalze in dem definierten Betriebsbereich höhenverstellt wird, so dass der Mindestabstand zu der Bodenoberfläche eingehalten wird.

5. Selbstfahrende Straßenbaumaschine nach einem der Ansprüche 1 bis 4, **dadurch gekennzeichnet, dass** der Maschinenrahmen (14) von in Arbeitsrichtung (3) linken Rädern (4, 6) oder Kettenlaufwerken zugeordneten linken Hubeinrichtungen (10, 12) und in Arbeitsrichtung rechten Rädern oder Kettenlaufwerken (5, 7) zugeordneten rechten Hubeinrichtungen (11, 13) getragen wird, wobei Aktoren (16A, 16B, 16C, 16D) zur Betätigung der linken und rechten Hubeinrichtungen (10, 11, 12, 13) vorgesehen sind, so dass die Höhe des Maschinenrahmens (14) und der an dem Maschinenrahmen angeordneten Fräs-/Mischwalze (18) in Bezug auf die Oberfläche des zu bearbeitenden Bodens durch Betätigung der den Hubeinrichtungen zugeordneten Aktoren verstellbar ist, wobei
eine Lektion des Lernmodus die Einstellung der Höhe des Maschinenrahmens (14) gegenüber der Oberfläche des zu bearbeitenden Bodens ist, wobei die Steuereinrichtung (27) für diese Lektion des Lernmodus derart konfiguriert ist,
dass, wenn die von der Zustandsüberwachungseinrichtung (32) erfasste Höhe der Fräs-/Mischwalze (18) in Bezug auf die Bodenoberfläche kleiner als ein Grenzwert für die Höhe ist, aus den in der Speichereinrichtung (30) gespeicherten Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle (26) visualisiert wird, welche einen Menschen zur Vornahme einer Befehlseingabe zum Anheben des Maschinenrahmens auffordert, so dass nach der Befehlseingabe den Hubeinrichtungen (10, 11, 12, 13) zugeordnete Aktoren (16A, 16B, 16C, 16D) derart betätigt werden, dass der Maschinenrahmen (14) angehoben wird, oder
dass, wenn die von der Zustandsüberwachungseinrichtung erfasste Höhe der Fräs-/Mischwalze (18) in Bezug auf die Bodenoberfläche größer als ein Grenzwert für die Höhe ist, aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zur Vornahme einer Befehlseingabe zum Absenken des Maschinenrahmens auffordert, so dass nach der Befehlseingabe den Hubeinrichtungen (10, 11, 12, 13) zugeordnete Aktoren (16A, 16B, 16C, 16D) derart betätigt werden, dass der Maschinenrahmen abgesenkt wird.

6. Selbstfahrende Straßenbaumaschine nach Anspruch 5, **dadurch gekennzeichnet, dass** die Steuereinrichtung für diese Lektion des Lernmodus derart konfiguriert ist, dass ein bestimmter Betriebsbereich für die Höhe der Fräs-/Mischwalze (18) durch einen Grenzwert für einen einzuhaltenden Mindestabstand von einem Bezugspunkt der Fräs-/Mischwalze zu der Oberfläche des zu bearbeitenden Bodens definiert wird und in Abhängigkeit von der nach der Visualisierung der Handlungsanweisung von einem Menschen vorgenommenen Befehlseingabe die der Befehlseingabe entsprechenden Steuerbefehlssignale für die den Hubeinrichtungen (10, 11, 12, 13) zugeordneten Aktoren (16A, 16B, 16C, 16D) nur dann erzeugt werden, wenn die Fräs-/Mischwalze (18) in dem definierten Betriebsbereich höhenverstellt wird, so dass der Mindestabstand zu der Bodenoberfläche eingehalten wird.

7. Selbstfahrende Straßenbaumaschine nach einem der Ansprüche 1 bis 6, **dadurch gekennzeichnet, dass** eine Lektion des Lernmodus die Einstellung der Querneigung des Maschinenrahmens (14) ist, wobei die Steuereinrichtung (27) für diese Lektion des Lernmodus derart konfiguriert ist,
dass, wenn eine von der Zustandsüberwachungseinrichtung (32) erfasste Querneigung des Maschinenrahmens (14) eine Neigung auf die rechte Seite ist, aus den in der Speichereinrichtung (30) gespeicherten Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle (26) visualisiert wird, welche einen Menschen zur Vornahme einer Befehlseingabe zum Rollen des Maschinenrahmens (14) auf die in Arbeitsrichtung (3) linke Seite der Straßenfräsmaschine auffordert, so dass nach der Befehlseingabe die den in Arbeitsrichtung linken Hubeinrichtungen (10, 12) zugeordneten Aktoren (16A, 16B) derart betätigt werden, dass der Maschinenrahmen (14) auf der linken Seite abgesenkt wird, und/oder die den in Arbeitsrichtung rechten Hubeinrichtungen (11, 13) zugeordneten Aktoren (16C, 16D) derart betätigt werden, dass der Maschinenrahmen (14) auf der rechten Seite angehoben wird, oder
dass, wenn die von der Zustandsüberwachungseinrichtung erfasste Querneigung des Maschinenrahmens eine Neigung auf die linke Seite ist, aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle (26) visualisiert wird, welche einen Menschen zur Vornahme einer Befehlseingabe zum Rollen des Maschinenrahmens (14) auf die in Arbeitsrichtung rechte Seite der Straßenfräsmaschine auffordert, so dass nach der Befehlseingabe die den in Arbeitsrichtung (3) rechten Hubeinrichtungen (11, 13) zugeordneten Aktoren (16C, 16D) derart betätigt werden, dass der Maschinenrahmen (14) auf der rechten Seite abgesenkt wird, und/oder die den in Arbeitsrichtung linken Hubeinrichtungen (10, 12) zugeordneten Aktoren (16A, 16B) derart betätigt werden, dass der Maschinenrahmen (14) auf der linken Seite angehoben wird.

8. Selbstfahrende Straßenbaumaschine nach Anspruch 7, **dadurch gekennzeichnet, dass** die Steuereinrichtung für diese Lektion des Lernmodus derart konfiguriert ist, dass ein bestimmter Betriebsbereich für die Höhe der höhenverstellbaren Fräs-/Mischwalze (18) durch einen Grenzwert für einen einzuhaltenden Mindestabstand von einem Bezugspunkt der Fräs-/Mischwalze zu der Oberfläche des zu bearbeitenden Bodens definiert wird und in Abhängigkeit von der nach der Visualisierung der Handlungsanweisung von einem Menschen vorgenommenen Befehlseingabe die der Befehlseingabe entsprechenden Steuerbefehlssignale für die den Hubeinrichtungen (10, 11, 12, 13) zugeordneten Aktoren (16A, 16B, 16C, 16D) nur dann erzeugt werden, wenn die Fräs-/Mischwalze in dem definierten Betriebsbereich höhenverstellt wird, so dass der Mindestabstand zu der Bodenoberfläche eingehalten wird.

9. Selbstfahrende Straßenbaumaschine nach einem der Ansprüche 1 bis 8, **dadurch gekennzeichnet, dass** eine Lektion des Lernmodus das Lenken der Räder oder Laufwerke ist, wobei die Steuereinrichtung (27) für diese Lektion des Lernmodus derart konfiguriert ist,
dass, wenn die von Zustandsüberwachungseinrichtung (32) erfasste Stellung der Räder oder Kettenlaufwerke eine nach rechts eingeschlagene Stellung der Räder oder Kettenlaufwerke ist, aus den von der Speichereinrichtung (30) gespeicherten Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle (26) visualisiert wird, welche einen Menschen zur Vornahme einer Befehlseingabe zum Lenken der vorderen Räder oder Kettenlaufwerke (4, 5) nach in Arbeitsrichtung (3) links auffordert, so dass nach der Befehlseingabe die den vorderen Rädern oder Kettenlaufwerken zugeordneten Aktoren (9A, 9B) derart betätigt werden, dass die vorderen Räder nach links einschlagen, oder
dass, wenn die von Zustandsüberwachungseinrichtung (32) erfasste Stellung der Räder oder Kettenlaufwerke eine nach links eingeschlagene Stellung der Räder oder Kettenlaufwerke ist, aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zur Vornahme einer Befehlseingabe zum Lenken der vorderen Räder oder Kettenlaufwerke (4, 5) nach in Arbeitsrichtung (3) rechts auffordert, so dass nach der Befehlseingabe die den Rädern oder Kettenlaufwerken zugeordneten Aktoren (9A, 9B) derart betätigt werden, dass die vorderen Räder nach rechts einschlagen, **oder**
dass, wenn die von Zustandsüberwachungseinrichtung (32) erfasste Stellung der Räder oder Kettenlaufwerke eine nach rechts oder links eingeschlagene Stellung ist, aus den von der Speichereinrichtung gespeicherten Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zum Geradeausstellen der vorderen Räder (4, 5) in Arbeitsrichtung (3) auffordert, so dass nach der Befehlseingabe die den vorderen Rädern oder Kettenlaufwerken (4, 5) zugeordneten Aktoren (9A, 9B) derart betätigt werden, dass die vorderen Räder in Arbeitsrichtung geradeausgestellt werden.

10. Selbstfahrende Straßenbaumaschine nach einem der Ansprüche 1 bis 9, **dadurch gekennzeichnet, dass** die Straßenbaumaschine zwei in Arbeitsrichtung vordere Räder oder Kettenlaufwerke (4, 5) und zwei in Arbeitsrichtung hintere Räder oder Kettenlaufwerke (6, 7) aufweist und die Steuereinrichtung (27) die Einstellung unterschiedlicher Lenkmodi vorsieht und die Zustandsüberwachungseinrichtung (32) derart konfiguriert ist, dass die Stellung der vorderen und hinteren Räder oder Kettenlaufwerke (4, 5, 6, 7) und der eingestellte Lenkmodus erfasst wird, wobei,
wenn der von Zustandsüberwachungseinrichtung (32) erfasste Lenkmodus eine Lenkung nur der vorderen Räder oder Kettenlaufwerke (4, 5) ist, aus den in der Speichereinrichtung gespeicherten Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zum Lenken nur der vorderen Räder oder Kettenlaufwerke (4, 5) auffordert, so dass nach der Befehlseingabe die den vorderen Rädern oder Kettenlaufwerken zugeordneten Aktoren derart betätigt werden, dass nur die vorderen Räder oder Kettenlaufwerke gelenkt werden, oder
wenn der von Zustandsüberwachungseinrichtung (32) erfasste Lenkmodus eine Lenkung der vorderen und hinteren Räder oder Kettenlaufwerke (4, 5, 6, 7) in entgegensetzte Richtungen ist, aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zum Lenken sowohl der vorderen als auch der hinteren Räder oder Kettenlaufwerke (4, 5, 6, 7) in entgegensetzte Richtungen auffordert, so dass nach der Befehlseingabe die den Rädern oder Kettenlaufwerken zugeordneten Aktoren (9A, 9B, 9C, 9D) derart betätigt werden, dass die vorderen und hinteren Räder oder Kettenlaufwerke (4, 5, 6, 7) in entgegengesetzte Richtungen gelenkt werden, oder
wenn der von Zustandsüberwachungseinrichtung (32) erfasste Lenkmodus eine Lenkung der vorderen und hinteren Räder oder Kettenlaufwerke (4, 5, 6, 7) in dieselbe Richtung ist, aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle visualisiert wird, welche einen Menschen zum Lenken sowohl der vorderen als auch der hinteren Räder oder Kettenlaufwerke (4, 5, 6, 7) in dieselbe Richtung auffordert, so dass nach der Befehlseingabe die den Rädern oder Kettenlaufwerken (4, 5, 6, 7) zugeordneten Aktoren (9A, 9B, 9C, 9D) derart betätigt werden, dass die vorderen und hinteren Räder oder Kettenlaufwerke (4, 5, 6, 7) gelenkt werden, oder
wenn der von Zustandsüberwachungseinrichtung (32) erfasste Lenkmodus eine Lenkung der vorderen und hinteren Räder oder Kettenlaufwerke unabhängig voneinander ist, aus den Handlungsanweisungs-Datensätzen ein Handlungsanweisungs-Datensatz ausgewählt und die dem ausgewählten Handlungsanweisungs-Datensatz entsprechende Handlungsanweisung mit der Mensch-Maschinen-Schnittstelle (26) visualisiert wird, welche einen Menschen zum Lenken der vorderen und der hinteren Räder oder Kettenlaufwerke (4, 5, 6, 7) unabhängig voneinander auffordert, so dass nach der Befehlseingabe die den vorderen bzw. hinteren Rädern oder Kettenlaufwerken (4, 5, 6, 7) zugeordneten Aktoren (9A, 9B, 9C, 9D) derart betätigt werden, dass die vorderen und hinteren Räder oder Kettenlaufwerke (4, 5, 6, 7) unabhängig voneinander gelenkt werden.

11. Selbstfahrende Straßenbaumaschine nach einem der Ansprüche 5 bis 10, **dadurch gekennzeichnet, dass** die Mensch-Maschinen-Schnittstelle (26) ein Bedienelement (37, 37A) zur Vornahme von Befehlseingaben für die Einstellung der Höhe und Neigung des Maschinenrahmens (14) gegenüber dem zu bearbeitenden Boden aufweist, welches derart ausgebildet ist, dass das Bedienelement (37) eine Neutralstellung, eine erste Stellung, eine zweite Stellung, eine dritte Stellung und eine vierte Stellung einnehmen kann, wobei,
wenn sich das Bedienelement in der Neutralstellung befindet, die Steuereinrichtung (27) derart ausgebildet ist, dass keine Steuerbefehlssignale für die den vorderen und hinteren, in Arbeitsrichtung linken und rechten Hubeinrichtungen (10, 11, 12, 13) zugeordneten Aktoren (16A, 16B, 16C, 16D) erzeugt werden, so dass die in Arbeitsrichtung linken und rechten, vorderen und hinteren Hubeinrichtungen in der momentan eingestellten Position verbleiben, ,
wenn sich das Bedienelement in der ersten Position befindet, die Steuereinrichtung (27) zum Anheben des Maschinenrahmens (14) derart ausgebildet ist, dass Steuerbefehlssignale für die den vorderen und hinteren, in Arbeitsrichtung linken und rechten Hubeinrichtungen (10, 11, 12, 13) zugeordneten Aktoren (16A, 16B, 16C, 16D) erzeugt werden, so dass die vorderen und hinteren, in Arbeitsrichtung linken und rechten Hubeinrichtungen angehoben werden, ,
wenn sich das Bedienelement in der zweiten Position befindet, die Steuereinrichtung (27) zum Absenken des Maschinenrahmens (14) derart ausgebildet ist, dass Steuerbefehlssignale für die den vorderen und hinteren, in Arbeitsrichtung linken und rechten Hubeinrichtungen (10, 11, 12, 13) zugeordneten Aktoren (16A, 16B, 16C, 16D) erzeugt werden, so dass die vorderen und hinteren, in Arbeitsrichtung linken und rechten Hubeinrichtungen abgesenkt werden,
wenn sich das Bedienelement in der dritten Position befindet, die Steuereinrichtung (27) zum Rollen des Maschinenrahmens auf die in Arbeitsrichtung linke Seite derart ausgebildet ist, dass Steuerbefehlssignale für die den vorderen und hinteren, in Arbeitsrichtung linken und rechten Hubeinrichtungen (10, 11, 12, 13) zugeordneten Aktoren (16A, 16B, 16C, 16D) erzeugt werden, so dass die vorderen und hinteren in Arbeitsrichtung linken Hubeinrichtungen (10, 13) abgesenkt und die vorderen und hinteren, in Arbeitsrichtung rechten Hubeinrichtungen (11, 13) angehoben werden,
wenn sich das Bedienelement in der vierten Position befindet, die Steuereinrichtung zum Rollen des Maschinenrahmens auf die in Arbeitsrichtung rechte Seite derart ausgebildet ist, dass Steuerbefehlssignale für die den vorderen und hinteren, in Arbeitsrichtung linken und rechten Hubeinrichtungen zugeordneten Aktoren erzeugt werden, so dass die vorderen und hinteren, in Arbeitsrichtung linken Hubeinrichtungen angehoben und die vorderen und hinteren in Arbeitsrichtung rechten Hubeinrichtungen abgesenkt werden.

12. Selbstfahrende Straßenbaumaschine nach einem der Ansprüche 1 bis 11, **dadurch gekennzeichnet, dass** die Mensch-Maschinen-Schnittstelle (26) zur Vornahme von Befehlseingaben für die Höheneinstellung der Fräs-/Mischwalze (18) gegenüber dem Maschinenrahmen ein Bedienelement (37, 37B) aufweist, dass derart ausgebildet ist, dass das Bedienelement eine Neutralstellung, eine erste Stellung und eine zweite Stellung einnehmen kann, wobei,
wenn sich das Bedienelement in der Neutralstellung befindet, die Steuereinrichtung (27) derart ausgebildet ist, dass keine Steuerbefehlssignale für den zumindest einen der Fräs-/Mischwalze (18) zugeordneten Aktor (20A, 20B) erzeugt werden, so dass die Fräs-/Mischwalze (18) in der momentan eingestellten Position verbleibt, ,
wenn sich das Bedienelement in der ersten Stellung befindet, die Steuereinrichtung (27) derart ausgebildet ist, dass Steuerbefehlssignale für den zumindest einen der Fräs-/Mischwalze (18) zugeordneten Aktor (20A, 20B) erzeugt werden, so dass die Fräs-/Mischwalze (18) angehoben wird,, und
wenn sich das Bedienelement in der zweiten Stellung befindet, die Steuereinrichtung (27) derart ausgebildet ist, dass Steuerbefehlssignale für den zumindest einen der Fräs-/Mischwalze (18) zugeordneten Aktor (20A, 20B) erzeugt werden, so dass die Fräs-/Mischwalze (18) abgesenkt wird.

13. Selbstfahrende Straßenbaumaschine nach einem der Ansprüche 1 bis 12, **dadurch gekennzeichnet, dass** die Mensch-Maschinen-Schnittstelle (26) zur Vornahme von Befehlseingaben
für die Lenkung nur der vorderen Räder oder Kettenlaufwerke (4, 5), der vorderen und hinteren Räder oder Kettenlaufwerke (4, 5, 6, 7) in dieselbe Richtung oder der vorderen und hinteren Räder oder Kettenlaufwerke (4, 5, 6, 7) in entgegengesetzte Richtungen ein als Lenkrad ausgebildetes Bedienelement (36) aufweist, und
für die Lenkung der vorderen und hinteren Räder oder Kettenlaufwerke (4, 5, 6, 7) unabhängig voneinander ein als Lenkrad ausgebildetes Bedienelement (36) für die Lenkung der vorderen Räder oder Kettenlaufwerke und ein als Steuerknüppel (37A) ausgebildetes Bedienelement für die Lenkung der hinteren Räder oder Kettenlaufwerke aufweist.

14. Selbstfahrende Straßenbaumaschine nach einem der Ansprüche 1 bis 13, **dadurch gekennzeichnet, dass** die Antriebe und/oder Aktoren (8, 9A, 9B, 9C, 9D, 16A, 16B, 16C, 16D, 20A, 20B) Hydraulikantriebe oder Hydraulikaktoren sind und die Straßenbaumaschine einen Antriebsmotor (24) zum Antrieb mindestens einer Hydraulikpumpe (23) zur Versorgung der Antriebe und/oder Aktoren (8, 9A, 9B, 9C, 9D, 16A, 16B, 16C, 16D, 20A, 20B) mit Hydraulikflüssigkeit aufweist, wobei die Zustandsüberwachungseinrichtung (32) derart konfiguriert ist, dass der Betrieb des Antriebsmotors (24) erfasst wird, und
dass die Steuereinrichtung (27) derart konfiguriert ist, dass, wenn die Zustandsüberwachungseinrichtung (32) den Betrieb des Antriebsmotors nicht erfasst, aus den Handlungsanweisungs-Datensätzen ein Handlungsanweisungs-Datensatz ausgewählt und mit der Mensch-Maschinen-Schnittstelle (26) die dem ausgewählten Handlungsanweisungs-Datensatz entsprechende Handlungsanweisung visualisiert wird, welche einen Menschen zur Vornahme einer Befehlseingabe zum Einschalten des Antriebsmotors (24) auffordert, so dass der Antriebsmotor eingeschaltet wird,.

15. Selbstfahrende Straßenbaumaschine nach einem der Ansprüche 1 bis 14, **dadurch gekennzeichnet, dass** die Mensch-Maschinen-Schnittstelle (26) zur Visualisierung von Handlungsanweisungs-Datensätzen zur Aufforderung eines Menschen zur Vornahme von Befehlseingaben ein Display (39) aufweist, auf dem die Visualisierung der Handlungsanweisungs-Datensätze mit grafischen Darstellungen (40), insbesondere Piktogrammen, erfolgt.
